(19) Europäisches Patentamt

European Patent Office

Office européen des brevets

(11) **EP 1 426 252 B1**

(12) **EUROPÄISCHE PATENTSCHRIFT**

(45) Veröffentlichungstag und Bekanntmachung des Hinweises auf die Patenterteilung:
**25.01.2006 Patentblatt 2006/04**

(51) Int Cl.:
*B60R 21/34* *(2006.01)*     *B60R 21/01* *(2006.01)*

(21) Anmeldenummer: **03027823.8**

(22) Anmeldetag: **03.12.2003**

(54) **Fussgängerschutzsystem und Verfahren zum Schutz von Fussgängern**

Pedestrian protection system and method thereof

Système et méthode de protection des piétons

(84) Benannte Vertragsstaaten:
**DE FR GB**

(30) Priorität: **05.12.2002 DE 10256950**

(43) Veröffentlichungstag der Anmeldung:
**09.06.2004 Patentblatt 2004/24**

(73) Patentinhaber:
- **Siemens Restraint Systems GmbH**
  **63755 Alzenau (DE)**
- **Benteler Automobiltechnik GmbH**
  **33104 Paderborn (DE)**
- **PEGUFORM GMBH**
  **79268 Bötzingen (DE)**

(72) Erfinder:
- **Fischer, Jochem**
  **73760 Ostfildern (DE)**

- **Kretschmar, Albrecht**
  **65618 Niederselters (DE)**
- **Böheim, Johannes**
  **79268 Bötzingen (DE)**
- **Hoffmann, Jörg**
  **66636 Theley (DE)**
- **Heitzer, Günter**
  **93102 Pfatter (DE)**

(74) Vertreter: **Fink, Stefan D.**
**Patentanwaltskanzlei Fink,**
**Wendl-Dietrich-Strasse 14**
**80634 München (DE)**

(56) Entgegenhaltungen:
DE-A- 10 030 465     DE-A- 10 045 698
DE-A- 10 100 880     US-B1- 6 212 456

**Beschreibung**

Die Erfindung betrifft ein Fußgängerschutzsystem für ein Fahrzeug, mit einer Sensorik zum Erfassen einer durch einen Aufprall eines Objekts auf das Fahrzeug bewirkten Deformation, Mitteln zum Auswerten der von der Sensorik gelieferten Signale, so dass Informationen über die Charakteristik des Aufpralls geliefert werden können, und einer Vorrichtung zum Anheben einer Haube, insbesondere einer Motorhaube, des Fahrzeugs, die in Abhängigkeit der Informationen über die Charakteristik des Aufpralls betätigt werden kann.

Die Erfindung betrifft weiterhin ein Verfahren zum Schutz von Fußgängern.

Derartige Systeme und Verfahren dienen dem Fußgängerschutz im Straßenverkehr. Kommt es zu einem Zusammenstoß zwischen einem Fahrzeug und einem Fußgänger, so zieht dies in vielen Fällen schwerwiegende Verletzungen des Fußgänger nach sich, die mitunter tödlich sein können. Grundsätzlich müssen daher Zusammenstöße von Fußgängern und Fahrzeugen vermieden werden. Dies stellt sowohl Anforderungen an das Verhalten von Fußgängern im Straßenverkehr, das Fahrverhalten von Fahrzeugführern als auch an die Entwicklungsrichtung von Fußgängerschutzsystemen.

Aber auch wenn derzeit die Unfallzahlen im Straßenverkehr vielfach rückläufig sind, was insbesondere auch der sich weiterentwickelnden Sicherheitstechnik zu verdanken ist, ändert dies nichts an der Gefahr für einen Fußgänger, falls es trotz größter Vorsicht und hochentwickelter Sicherheitstechnik dennoch zu einem Zusammenstoß kommt. Häufig schlägt ein Fußgänger nach dem Zusammenstoß mit einem Fahrzeug mit dem Kopf auf der Motorhaube auf, wobei er sich ernsthafte Schädel- und Gehirnverletzungen zuzieht. Da im Allgemeinen und insbesondere bei modernen bauraumoptimierten Fahrzeugen nur ein sehr geringer Freiraum unter der Motorhaube vorgesehen ist, wird der Aufprall des Kopfes um so härter, da nach Deformation der Motorhaube die verbleibende kinetische Energie des Aufpralls sehr rasch von den im Motorraum angeordneten Komponenten aufgenommen wird, dabei sehr häufig von dem praktisch nicht deformierbaren Motorblock. Um dies zu vermeiden, wäre bei einer Aufprallgeschwindigkeit von beispielsweise 40 km/h ein Freiraum unter einer aus herkömmlichen Materialien gefertigten Motorhaube von etwa 70 mm erforderlich, was mit derzeitigen Fahrzeugkonzepten schwer zu realisieren ist.

Beispielsweise in der DE 100 30 465 A1 wurde bereits vorgeschlagen, Sensoren im Frontbereich des Fahrzeugs anzubringen, die in der Lage sind, einen Aufprall zu erkennen und mit hoher Wahrscheinlichkeit zu entscheiden, ob es sich um einen Fußgängeraufprall handelt. In diesem Fall werden Airbags gezündet, die den Aufprall des Kopfes des Fußgängers auf die Motorhaube verhindern beziehungsweise dämpfen.

Ein anderes System ist aus der DE 199 46 408 A1 bekannt. Durch die Verwendung von Pre-Crash-Sensoren kann der unmittelbar bevorstehende Aufprall eines Objekts vorhergesehen werden. Um zusätzlichen Freiraum unter der Motorhaube zu schaffen und so einen ausreichenden Deformationsweg zur Verfügung zu stellen, wird die Motorhaube im hinteren Bereich angehoben.

Bei einem weiteren System, das in der EP 1 078 826 A1 offenbart ist, findet auch eine Anhebung der Motorhaube zur Dämpfung des Aufpralls statt, allerdings erst nach dem Erfassen des Kontakts zwischen dem Fahrzeug und dem Fußgänger durch an der vorderkante der Motorhaube angeordnete Sensoren.

Die genannten Systeme bieten zusätzlichen Schutz für Fußgänger, sie sind jedoch alle auch mit Nachteilen verbunden.

Bei dem System der DE 100 30 465 A1 kann zwar mit einiger Zuverlässigkeit entschieden werden, ob das aufprallende Objekt ein Fußgänger ist, wobei jedoch in Kauf genommen werden muss, dass der Fußgänger mit einem Sensor im Stoßfänger und mit einem Sensor in der Motorhaube in Kontakt kommt. Aus der Zeitdifferenz kann dann ermittelt werden, ob es sich mit großer Wahrscheinlichkeit um einen Fußgänger handelt. Diese Zeitdifferenz geht jedoch für eine Reaktion des Systems verloren, so dass aus diesem Grund sehr schnellwirkende Mittel zur Verfügung gestellt werden müssen, beispielsweise extrem schnell zündende Airbags. Diese sind aber nicht reversibel, was von Nachteil ist.

Bei der DE 199 46 408 A1 besteht insbesondere das Problem, dass mittels Pre-Crash-Sensoren, die beispielsweise auf Radar basieren, keine ausreichende Sicherheit beim Erkennen eines bevorstehenden Aufpralls gegeben ist. Zudem sind die Systeme beim Erkennen der Art des Objekts noch sehr unzuverlässig.

Bei dem weiteren System gemäß der EP 1 078 826 A1 ist ebenfalls vorgesehen, einen Aufprall des Fußgängers auf der Motorhaube zu detektieren. Es werden allerdings keine zuverlässigen Entscheidungskriterien angeboten, um den Fußgängeraufprall beispielsweise von einem Aufprall eines sonstigen Objektes zu unterscheiden.

Bezüglich letztgenannter Problematik wurde in der US 6,212,456 B1 vorgeschlagen, eine Vielzahl von Sensoren zu verwenden, die ein druckabhängiges Ausgangssignal liefern. Die Gesamtheit der Sensoren liefert somit ein Druckmuster, was mit gespeicherten charakteristischen Druckmustern verglichen werden kann. Auf diese Weise können verschiedene Objekte voneinander unterschieden werden. Somit steht zwar ein System zur Verfügung, das mit großer Zuverlässigkeit nur dann Maßnahmen zur Dämpfung eines Aufpralls bereitstellt, wenn dies erforderlich sind, wobei allerdings ein hoher Aufwand getrieben wird, der insbesondere mit der großen Anzahl der erforderlichen Sensoren in Verbindung steht.

Es ist sehr wichtig für ein zuverlässiges und sicheres Arbeiten von Fußgängerschutzsystemen, dass der Aufprall eines Fußgängers von sonstigen Ereignissen unterschieden werden kann. Beispielsweise will man verhindern, dass Maßnahmen zur Dämpfung des Aufpralls ergriffen werden, wenn lediglich ein Parkrempler vorliegt, wenn ein Aufprall auf ein starres Hindernis, beispielsweise einen Baum erfolgt, wenn Kleintiere vom fahrenden Fahrzeug erfasst werden oder auch wenn ein Aufprall auf das Fahrzeug bei hoher Relativgeschwindigkeit zu dem Objekt, das heißt im Allgemeinen bei hoher Fahrzeuggeschwindigkeit erfolgt.

Aus der EP 1 209 366 A1 ist eine Betätigungsvorrichtung für den Einsatz in Kraftfahrzeugen, mit einem ein komprimiertes Druckmedium bevorratenden Speicher und einem pneumatischen Aktor bekannt, bei der der Speicher und der pneumatische Aktor miteinander verbunden sind und die Verbindung mittels eines Ventils verschließbar ist und bei der der pneumatische Aktor einen axial und radial elastischen Schlauch umfasst, wobei sich durch Druckbeaufschlagung des pneumatischen Aktors der Durchmesser des Schlauches vergrößert und die Länge des Schlauches verkürzt. Die durch die Verkürzung des Schlauches nutzbare Wegstrecke dient zur Betätigung einer weiteren, nachgeordneten Vorrichtung.

Aus der gattungsbildenden DE 101 00 880 A1 ist ferner ein Verfahren zur Aufprallerkennung bei einem Fahrzeug bekannt. Bei diesem Verfahren wird die Relativbeschleunigung zwischen dem Kraftfahrzeug und dem Aufprallobjekt unter Verwendung von Precrash-Sensoren bestimmt, wobei aus der Relativbewegung und der Rückhaltekraft die effektive Masse des Aufprallobjektes bestimmt wird. Als die Unfallschwere bestimmenden Parameter werden die effektive Masse des Aufprallobjektes und die Aufprallgeschwindigkeit bzw. -energie herangezogen. In Abhängigkeit von der effektiven Masse des Aufprallobjektes werden dann Schutzsysteme aktiviert. Die effektive Beschleunigung wird aus der Relativverzögerung und der Verzögerung des Fahrzeuges ermittelt. Zur Berechnung der effektiven Masse wird auf zwei unterschiedliche Möglichkeiten zurückgegriffen: zum einen auf die durch die Beschleunigungssensoren im Fahrzeug gemessene Beschleunigung a und zum anderen auf die Kraft F. Die effektive Masse ist zusammen mit der Relativgeschwindigkeit dann das Maß für die Unfallschwere.

Wenn im Rahmen der vorliegenden Offenbarung von einem Fußgänger die Rede ist, so ist dies sehr allgemein zu verstehen. Selbstverständlich können auch Fahrradfahrer, Rollschuhfahrer oder sonstige Verkehrsteilnehmer dem stellvertretend verwendeten Begriff Fußgänger im Sinne der verbesserten Sicherheit im Straßenverkehr untergeordnet werden.

Unter Betätigungsvorrichtung im Rahmen der vorliegenden Offenbarung sind vorwiegend Vorrichtungen zu verstehen, die auf ein Signal hin unter Hinzunahme von Hilfsenergie definierte Aktionen in Gang setzen.

Der Erfindung liegt die Aufgabe zugrunde, ein Fußgängerschutzsystem und ein Verfahren zum Schutz von Fußgängern zu schaffen, die die Nachteile des Standes der Technik beseitigen, wobei insbesondere der Aufprall eines Fußgängers zuverlässig und mit kostengünstigen Mitteln erkannt werden kann, um insbesondere zu entscheiden, ob ein Fußgängerschutz aktiviert werden soll und wobei eine mechanische Betätigung mit schnellem Ansprechverhalten beziehungsweise kleiner Verstellzeit vorgesehen ist.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die Erfindung baut auf dem gattungsgemäßen System dadurch auf, dass die Mittel zum Auswerten der bewirkten Deformationen eine Deformationsarbeit ermitteln können, dass die Mittel zum Auswerten unter Berücksichtigung von Zeitinformation, die von der Sensorik erfasst wird, eine Intrusionsgeschwindigkeit des Objekts ermitteln können, dass unter Berücksichtigung der Deformationsarbeit und der Intrusionsgeschwindigkeit ein die Masse des Objekts kennzeichnender Parameter ermittelbar ist und dass die Intrusionsgeschwindigkeit und die Masse des Objekts berücksichtigt werden, um zu entscheiden, ob die Vorrichtung zum Anheben der Haube betätigt wird. Im Rahmen des erfindungsgemäßen Systems geht man davon aus, dass die gesamte kinetische Energie, die sich aus der Relativgeschwindigkeit von Objekt und Fahrzeug und aus der Objektmasse ergibt, in Deformationsarbeit umgewandelt wird. Kennt man diese Deformationsarbeit auf der Grundlage der Auswertung der Sensoren und weiterhin die Intrusionsgeschwindigkeit des Objekts, das heißt im Idealfall die unverminderte Geschwindigkeit im Moment des Aufpralls, so kann aus diesen Ausgangsgrößen die Masse des Objekts beziehungsweise ein die Masse des Objekts kennzeichnender Parameter ermittelt werden. Damit liegt ein zuverlässiges Kriterium vor, auf dessen Grundlage das Auslösen eines Fußgängerschutzes gestattet oder verhindert werden kann.

Das erfindungsgemäße Fußgängerschutzsystem ist insbesondere dadurch vorteilhaft, dass die Mittel zum Auswerten die Deformationsarbeit auf der Grundlage einer gespeicherten Tabelle und/oder einer Berechnung ermitteln. Die Tabelle oder Berechnung stellt unterschiedliche Deformationsmuster mit der im Fahrzeug deponierten Deformationsarbeit in Beziehung, so dass in Kenntnis des Deformationsmusters die Deformationsarbeit als eine der Ausgangsgrößen für die Ermittlung der Masse beziehungsweise des Massenparameters zur Verfügung steht.

Besonders nützlich ist es, dass der die Masse des Objekts kennzeichnende Parameter nach der Beziehung

$$m_0 \;=\; k \;\cdot\; \frac{W_{Def}}{v_0^2}$$

berechenbar ist, wobei

$m_0$ :     Masse,
$W_{Def}$ :     Deformationsarbeit,
$v_0$ :     Intrusionsgeschwindigkeit, beim ersten Kontakt zu einem Zeitpunkt $t_0$,
$k$ :     Konstante.

Diese Beziehung ergibt sich aus der Energiebilanz des Aufpralls, indem man davon ausgeht, dass die gesamte kinetische Energie des Aufpralls letztlich in Deformationsarbeit umgesetzt wird. Das Frontend ist so ausgelegt, dass diese Annahme für den Aufprall von Fußgängern in guter Näherung zutrifft.

Das erfindungsgemäße Fußgängerschutzsystem ist in besonders vorteilhafter Weise dadurch weitergebildet, dass aus dem die Masse des Objekts kennzeichnenden Parameter eine effektive Masse nach der Beziehung

$$m_{eff} \;=\; f_{dyn} \;\cdot\; m_0$$

berechenbar ist, wobei

$m_0$ :     Masse,
$m_{eff}$ :     effektive Masse,
$f_{dyn}$ :     Dynamikfaktor.

Der Dynamikfaktor ergibt sich aus der Dynamik des Signalverlaufs. Durch einen solchen Dynamikfaktor wird beispielsweise berücksichtigt, dass die kinetische Energie nicht ausschließlich in Form von Deformationsarbeit im Fahrzeug umgesetzt wird, sondern dass beispielsweise das Bein eines Fußgängers, das auf die Sensorik aufprallt, ebenfalls eine Deformation erfährt. In diesem Sinne ist der Dynamikfaktor ein Korrekturterm, der die realen Verhältnisse beim Aufprall berücksichtigt.

Das erfindungsgemäße Fußgängerschutzsystem ist in besonders vorteilhafter Weise dadurch weitergebildet, dass bei einer Masse $m_0$ beziehungsweise einer effektiven Masse $m_{eff}$ zwischen ca. 5 kg und 20 kg ein Aktivieren eines Fußgängerschutzes möglich ist und dass bei einer Masse $m_0$ beziehungsweise einer effektiven Masse $m_{eff}$ kleiner als ca. 5 kg und größer als 20 kg ein Aktivieren eines Fußgängerschutzes verhindert wird. Auf diese Weise wird ein Massenfenster zur Verfügung gestellt, das nur in dem Fall das Aktivieren des Fußgängerschutzes ermöglicht, wenn mit großer Wahrscheinlichkeit der Aufprall eines Fußgängers vorliegt. Es wird verhindert, dass bei effektiven Massen unterhalb von etwa 5 kg, ein Fußgängerschutz aktiviert wird, so dass hierdurch beispielsweise das Auslösen des Fußgängerschutzes bei Zusammenstößen mit Kleintieren verhindert wird. Ebenfalls soll ein Aktivieren des Fußgängerschutzes bei effektiven Massen oberhalb von 20 kg verhindert werden. Dies hat den Vorteil, dass bei Systemen, bei denen der Fußgängerschutz im Aufstellen der Motorhaube besteht, dieses beispielsweise beim Aufprall auf eine Mauer oder auf einen Baum verhindert wird. So wird vermieden, dass die aufgestellte Motorhaube die Insassen des Fahrzeugs zusätzlich gefährdet, indem diese nämlich durch die Windschutzscheibe in den Fahrzeuginnenraum geschoben würde.

Ebenfalls ist es besonders nützlich, dass bei einer Intrusionsgeschwindigkeit zwischen ca. 20 km/h und 60 km/h ein Aktivieren eines Fußgängerschutzes möglich ist und dass bei einer Intrusionsgeschwindigkeit kleiner als ca. 20 km/h und größer als 60 km/h ein Aktivieren eines Fußgängerschutzes verhindert wird. Auch hierdurch wird beispielsweise bei Zusammenstößen mit niedriger Geschwindigkeit ein Auslösen des Fußgängerschutzes verhindert. Bei Zusammenstößen mit hoher Geschwindigkeit soll dies auch verhindert werden, da wiederum eine zusätzliche Gefährdung der Insassen des Kraftfahrzeugs vermieden werden soll.

Die Erfindung ist in besonders vorteilhafter Weise dadurch weitergebildet, dass die Sensorik mehrere Sensoren mit mehreren sensitiven Bereichen umfasst, wobei sich die sensitiven Bereiche an verschiedenen Orten des Fahrzeugs, insbesondere der Fahrzeugfront, befinden. Durch die Maßnahme, dass ein Sensor mehrere sensitive Bereiche aufweist, kann die Anzahl der erforderlichen Sensoren erheblich verringert werden. Dabei nimmt man bewusst in Kauf, dass Information bezüglich des Aufprallortes zumindest teilweise verloren geht. Dies ist vor dem Hintergrund verständlich, dass in den meisten Systemen ohnehin nur eine einzige Maßnahme zur Verfügung steht, um den Aufprall zu dämpfen, sei es durch einen Airbag oder, wie vorzugsweise im Rahmen des erfindungsgemäßen Systems, durch das Anheben der Motorhaube im hinteren Bereich. Auch wenn die Information bezüglich des Aufprallortes verloren geht, so bleibt doch als wesentliche Information diejenige über die Charakteristik des Aufpralls erhalten. So kann beispielsweise der Aufprall eines Fußgängers von einem Parkrempler unterschieden werden.

Das erfindungsgemäße Fußgängerschutzsystem ist in besonders vorteilhafter Weise dadurch weitergebildet, dass die Sensoren beziehungsweise die sensitiven Bereiche der Sensoren entlang einem Stoßfänger des Fahrzeugs angeordnet sind. Auf diese Weise wird der Forderung Rechnung getragen, dass der Aufprall des Fußgängers möglichst frühzeitig erfasst wird, das heißt bei der Verwendung von Kontaktsensoren durch eine Anordnung von Sensoren möglichst weit vorne am Fahrzeug. Ein einzelner Sensor kann sich so beispielsweise über die gesamte Länge des Stoßfängers erstrecken, wobei eine Vielzahl sensitiver Bereiche zur Erfassung der Charakteristik des Aufpralls entlang der Länge des Sensors vorgesehen sind.

Es kann nützlich sein, dass die einem Sensor zugehörigen sensitiven Bereiche in regelmäßigen Abständen entlang einem Stoßfänger des Fahrzeugs angeordnet sind. Auf diese Weise kann ein Sensor den gesamten Bereich über den er sich erstreckt, mit gleichmäßiger Charakteristik abdecken.

Ebenfalls kann es nützlich sein, dass sensitive Bereiche benachbarter Sensoren zueinander versetzt beziehungsweise nebeneinander angeordnet sind, so dass beim Aufprall eines Objekts von benachbarten Sensoren Signale mit unterschiedlichen Intensitäten geliefert werden. Wären die sensitiven Bereiche benachbarter Sensoren nicht versetzt angeordnet, das heißt bei Längserstreckung der Sensoren entlang dem Stoßfänger des Fahrzeugs untereinander, so würden die Sensoren in vielen Fällen mit gleicher oder ähnlicher Deformation beaufschlagt und somit gleiche oder ähnliche Signalintensitäten liefern. Indem nun die Sensoren versetzt angeordnet werden, liefern diese im Allgemeinen unterschiedliche Signalintensitäten, die wiederum zur Ermittlung der Aufprallcharakteristik und somit zur Erkennung des Objektes verwendet werden können.

Weiterhin ist das erfindungsgemäße Fußgängerschutzsystem besonders dadurch in vorteilhafter Weise ausgebildet, dass die Sensoren optische Fasersensoren sind, an deren einem Ende Licht eingekoppelt werden kann und an deren anderem Ende die Intensität von austretendem Licht gemessen werden kann, dass die sensitiven Bereiche der Sensoren durch Veränderung der Oberfläche der optischen Fasersensoren geschaffen sind und dass in Abhängigkeit der Deformation der sensitiven Bereiche mehr oder weniger Licht aus den sensitiven Bereichen ausgekoppelt werden kann, so dass die gemessene Intensität von austretendem Licht als Maß für die Deformation der sensitiven Bereiche verwendet werden kann. Derartige Sensoren, beispielsweise aus Polymethylmethacrylat, eignen sich aus mehreren Gründen besonders für die Realisierung der vorliegenden Erfindung. Die optischen Fasersensoren sind flexibel, sie haben ein geringes Gewicht, eine große mechanische Belastbarkeit, und sind temperaturunempfindlich. Weiterhin gibt es keine Probleme im Hinblick auf die elektromagnetische Verträglichkeit. Die optischen Fasersensoren sind vorzugsweise in einem Matrixmaterial eingebettet. Bei nicht gebogenem Fasersensor tritt aus dem sensitiven Bereich eine bestimmte Lichtmenge aus, die aus den geometrischen Verhältnissen resultiert. Wird der Sensor gebogen, so kann dies zu einer Beeinflussung der austretenden Lichtintensität führen, was sich im Wesentlichen aus den Gesetzen der geometrischen Optik ergibt.

Das erfindungsgemäße Fußgängerschutzsystem ist insbesondere dadurch vorteilhaft weitergebildet, dass eine Betätigungsvorrichtung vorgesehen ist, welche eine Druckversorgungseinrichtung und einen mit der Druckversorgungseinrichtung mittels eines Ventils verbundenen Aktor, insbesondere einen pneumatischen Aktor aufweist, dass die Vorrichtung zum Anheben der Haube mit der Betätigungsvorrichtung verbindbar ist und durch Druckbeaufschlagung des Aktors betätigbar ist und dass die Vorrichtung zum Anheben der Motorhaube wenigstens ein Hauben-Halteelement und wenigstens einen Riegel aufweist, wobei bei Betätigung der Vorrichtung das Hauben-Halteelement in eine Entriegelungsstellung verstellbar ist. Durch die Verwendung einer Druckversorgungseinrichtung als Energiequelle wird eine autark arbeitende Einheit geschaffen, wobei die nachgeschaltete Vorrichtung zum Anheben der Motorhaube die durch Kontraktion des pneumatischen Aktors zur Verfügung stehende Längskraft nutzt, um die Verriegelung der Vorrichtung zum Anheben der Motorhaube zu lösen. Durch den Riegel wird verhindert, dass die Motorhaube von Hand angehoben werden kann. Ein weiterer Vorteil besteht darin, dass die Vorrichtung zum Anheben der Motorhaube reversible Eigenschaften hat, was beispielsweise bei Aktoren mit Sprengsätzen nicht der Fall wäre.

Es ist besonders vorteilhaft, dass die Betätigungsvorrichtung und die Vorrichtung zum Anheben der Motorhaube mittels eines Zwischenelementes miteinander verbunden sind. Durch das Vorsehen eines Zwischenelements ist die Flexibilität der Sicherheitseinrichtung gewährleistet, da somit die Betätigungsvorrichtung und die Vorrichtung zum Anheben der Motorhaube separat herstellbar und austauschbar sind.

Ebenfalls ist es besonders nützlich, dass das Hauben-Halteelement um eine Halteelement-Achse schwenkbar ist und mit einem Tragelement verbunden ist, wobei das Tragelement wenigstens einen, vorzugsweise zwei Schlitze aufweist, in dem die Achse in einen Entriegelungs- beziehungsweise einen Verriegelungszustand gleitet. Das Vorsehen eines Tragelements sowie die Anbindung des Hauben-Halteelementes mittels einer drehbaren Achse an dieses Tragelement ist besonders vorteilhaft, da somit die Vorrichtung zum Anheben der Motorhaube stabil und zuverlässig ausgebildet wird. Durch das Vorsehen von Schlitzen in dem Tragelement wird auf eine einfache Weise nicht nur die Drehung des Hauben-Halteelements um die Achse ermöglicht, sondern auch seine lineare Verschiebung.

Besonders vorteilhaft ist, dass der Schlitz an einem Ende des Tragelementes vorgesehen ist, welches der Betätigungsvorrichtung zugewandt ist, wobei der Schlitz derart dimensioniert ist, dass seine Länge der Verkürzung des Aktors bei einer Druckbeaufschlagung im Wesentlichen entspricht. Durch diese Maßnahme wird erreicht, dass das Hauben-Halteelement die Motorhaube bis zu einer gewünschten Höhe anhebt. Darüber hinaus wird die kinetische Energie durch die Druckbeaufschlagung des komprimierten Mediums vollständig benutzt.

Es kann nützlich sein, dass der wenigstens eine Riegel derart ausgebildet ist, dass ein erster Teil des Riegels im Wesentlichen U-förmig ausgebildet ist und mit dem Tragelement schwenkbar verbunden ist und ein zweiter Teil des Riegels mittels einer Zwischenelement-Achse mit dem Zwischenelement verbindbar ist. Durch diese feste Verbindung des Riegels an dem Tragelement wird die Stabilität der Vorrichtung zum Anheben der Motorhaube wesentlich erhöht. Durch die Verbindung des zweiten Teil des Riegels mittels der Zwischenelement-Achse mit dem Zwischenelement wird die Verbindung zwischen der Betätigungsvorrichtung und der Vorrichtung zum Anheben der Motorhaube gewährleistet.

Es ist besonders vorteilhaft, dass der zweite Teil des wenigstens einen Riegels schienenförmig ausgebildet ist und die Zwischenelement-Achse bei einer Druckbeaufschlagung in der Schiene läuft. Dadurch wird erreicht, dass einerseits der Riegel eine aktive Verbindung zwischen den beiden Vorrichtungen darstellt und, dass andererseits eine Fehlentriegelung nicht möglich ist.

Besonders vorteilhaft ist, dass die Halteelement-Achse und die zwischenelement-Achse an ihren beiden Enden fest mittels mindestens einer Achsenverbindung miteinander verbunden sind. Durch diese feste Verbindung wird ermöglicht, dass der schienenförmige Teil des Riegels parallel zu dem Schlitz des Tragelementes angeordnet wird. Dadurch wird erreicht, dass die Halteelement-Achse in eine Endposition gelangt, in der die Haubenhalte-Elemente die Motorhaube in einer erhöhten Position anheben.

Es ist besonders vorteilhaft, dass der zweite Teil des wenigstens einen Riegels einteilig mit dem ersten im Wesentlichen U-förmigen Teil des Riegels ausgebildet ist, wobei der zweite Teil als Verlängerung von einem der einander gegenüberliegenden U-Teile ausgebildet ist und in Bezug auf diesen U-Teil einen Winkel $\alpha$ einschließt, wobei $\alpha$ gleich oder vorzugsweise größer als 90° ist. Diese einteilige Ausformung des Riegels erhöht seine Stabilität, wobei auch eine andere Form des ersten Riegelteils als die U-Form vorgesehen werden kann. Darüber hinaus wird durch diese vorteilhafte Ausbildung eine kleinere Abweichung der inaktiven Position des Riegels in Bezug auf das Tragelement bei Betätigung der Vorrichtung ermöglicht.

Eine weitere vorteilhafte Ausführungsform sieht vor, dass ein zweites Hauben-Halteelement vorgesehen ist, welches an einem der Betätigungsvorrichtung abgewandten Ende des Tragelementes schwenkbar befestigt ist, wobei die beiden Hauben-Halteelemente synchron betätigbar sind. Das Vorsehen eines zweiten Hauben-Halteelementes erfordert einen kleinen zusätzlichen Aufwand und erhöht die Stabilität und die Zuverlässigkeit der Haubenhalterung als Ganzes. Darüber hinaus kann vorgesehen werden, dass die beiden Hauben-Halteelemente an ihren oberen, mit der Haube angrenzenden Enden mittels eines Verbindungselementes miteinander in Verbindung stehen.

Es ist besonders vorteilhaft, dass das U-förmige Teil des Riegels und die Halteelement-Achse derart dimensioniert sind, dass in Verriegelungsposition die Halteelement-Achse mit dem U-förmigen Teil des Riegels form- und/oder kraftschlüssig zusammenwirkt. Durch diese Ausbildung wird erreicht, dass die Halteelement-Achse, um die das Halteelement schwenkbar ist, als Riegelgegenstück benutzt wird.

Eine besonders vorteilhafte Ausbildung der Erfindung sieht vor, dass die Hauben-Halteelemente derart miteinander verbunden sind, dass eine trapezförmige Haubenhalterung gebildet ist. Dabei bilden die beiden Halteelemente die beiden Trapezschenkel.

Es ist besonders vorteilhaft, dass die Druckversorgungseinrichtung der Betätigungsvorrichtung eine Pumpe, insbesondere eine Mikropumpe, und einen zwischen der Pumpe und dem Ventil angeordneten Druckspeicher aufweist, wobei das Ventil ein Hochgeschwindigkeitsventil ist. Durch das Öffnen des Ventils wird die Verbindung zwischen der Druckversorgungseinrichtung und dem pneumatischen Aktor hergestellt. Infolge des Öffnens des Ventils wird der pneumatische Aktor durch das komprimierte und bevorratete Druckmedium beaufschlagt, und zwar mit einer hohen Geschwindigkeit.

Weiterhin ist es nützlich, dass die Druckversorgungseinrichtung der Betätigungseinrichtung eine Pumpe, insbesondere eine Mikropumpe aufweist, welche mit dem Ventil verbunden ist, wobei ein Druckspeicher vorgesehen ist, welcher sich zur Reduzierung des von der Druckversorgungseinrichtung beanspruchten Bauraums in den Aktor erstreckt.

Besonders vorteilhaft ist, dass der Aktor einerseits fest mit der Druckversorgungseinrichtung verbunden ist, wobei vorzugsweise eine Pendelanbindung vorgesehen ist, und andererseits mittels des Zwischenelementes mit der Betätigungseinrichtung verbunden ist. Diese Maßnahme führt zu einer erhöhten Sicherheit der Verbindung.

Der Aktor kann vorzugsweise durch Druckluft, Gas oder Flüssigkeit betätigt werden.

Die Erfindung betrifft weiterhin ein Verfahren zum Schutz von Fußgängern zur Durchführung mit einem erfindungsgemäßen System. Auf diese Weise werden die Vorteile und Besonderheiten des erfindungsgemäßen Systems auch im Rahmen eines Verfahrens umgesetzt.

Der Erfindung liegt die Erkenntnis zugrunde, dass über die Bestimmung der Deformation bei einem Aufprall und die Erfassung von Zeitinformation eine Massenbestimmung möglich ist, die letztlich als Entscheidungskriterium für ein Auslösen eines Fußgängerschutzes herangezogen werden kann. Indem die Fußgängererkennung auf der Grundlage von Sensoren mit mehreren sensitiven Bereichen erfolgt, kann die Anzahl der Sensoren stark verringert werden, was eine erhebliche Einsparung von Kosten mit sich bringt. Diese Kosteneinsparung resultiert sowohl aus der Reduzierung der Sensoren selbst als auch aus der einfacheren Ausgestaltung der Auswerteelektronik. Die mit der Anhebemechanik in Verbindung stehenden Merkmale der Erfindung ermöglichen eine zuverlässige Auslegung des Systems, einerseits, was das Anheben der Haube betrifft, und andererseits, was die Verriegelung der Haube betrifft.

Die Erfindung wird nun unter Bezugnahme auf die beigefügten Zeichnungen anhand bevorzugter Ausführungsformen beispielhaft erläutert.

Es zeigen:

Figur 1       einen Abschnitt eines Kraftfahrzeugs mit einem erfindungsgemäßen System;

Figur 2       eine schematische Darstellung eines Objekts vor dem Aufprall auf ein Fahrzeug;

Figur 3       eine schematische Darstellung eines Objekts nach dem Aufprall auf ein Fahrzeug;

Figur 4       eine schematische Darstellung eines weiteren Objekts nach dem Aufprall auf ein Fahrzeug;

Figur 5       ein Flussdiagramm zur Erläuterung eines erfindungsgemäßen Verfahrens;

Figur 6       eine Kontaktsensoranordnung und ein eindringendes Objekt;

Figur 7       drei Beispiele von Kontaktsensoranordnungen mit mehreren sensitiven beziehungsweise aktiven Bereichen;

Figur 8       eine Draufsicht auf das vordere Ende eines Kraftfahrzeugs zur Erläuterung der Anordnung von Sensoren;

Figur 9       eine geschnittene Seitenansicht eines vorderen Bereiches eines Kraftfahrzeugs zur Erläuterung der Bereitstellung einer Verformbarkeit;

Figur 10       eine geschnittene Seitenansicht eines vorderen Bereiches eines Kraftfahrzeugs zur Erläuterung einer weiteren Möglichkeit zur Bereitstellung einer Verformbarkeit;

Figur 11       einen Ausschnitt aus einem optischen Fasersensor mit einem sensitiven Bereich in drei verschiedenen Zuständen;

Figur 12       eine Anordnung optischer Fasersensoren mit Lichtquelle und Detektoren;

Figur 13       ein Blockdiagramm zur Erläuterung des Systemaufbaus;

Figur 14       eine Seitenansicht einer bevorzugten Anhebemechanik für ein erfindungsgemäßes Fußgängerschutzsystem in der Ruheposition;

Figur 15       eine Seitenansicht der in Figur 14 gezeigten Ausführungsform in der Arbeitsposition;

Figur 16       eine perspektivische Darstellung einer bevorzugten Anhebemechanik in der Ruheposition;

Figur 17       eine vergrößerte perspektivische Darstellung der Vorrichtung zum Anheben der Motorhaube gemäß Figur 16 in Ruheposition;

Figur 18       eine vergrößerte perspektivische Darstellung der Vorrichtung zum Anheben der Motorhaube mit einem Zwischenelement gemäß Figur 16 in der Arbeitsposition;

Figur 19       eine vergrößerte perspektivische Darstellung der Vorrichtung zum Anheben der Motorhaube mit einem Zwischenelement gemäß Figur 16 in der Endposition;

Figur 20       eine perspektivische Darstellung einer Betätigungsvorrichtung in einer ersten Ausführungsform in der Ruheposition gemäß Figur 14;

Figur 21    eine perspektivische Darstellung einer Betätigungsvorrichtung gemäß Figur 14 mit einem Druckspeicher;

Figur 22    eine perspektivische Darstellung einer Betätigungsvorrichtung gemäß einer weiteren Ausführungsform; und

Figur 23    eine perspektivische Darstellung einer Betätigungsvorrichtung gemäß Figur 22 mit einer Pendelanbindung.

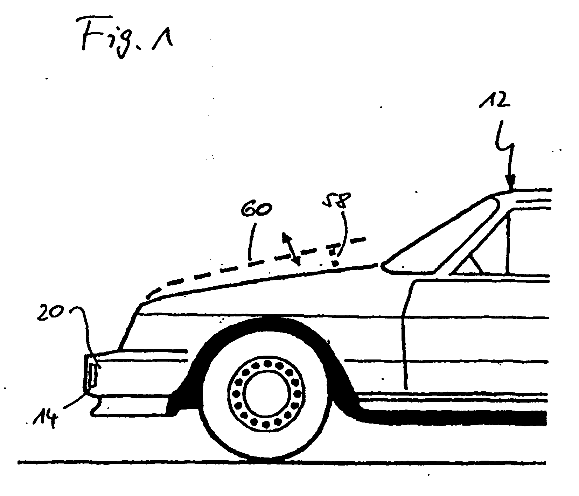

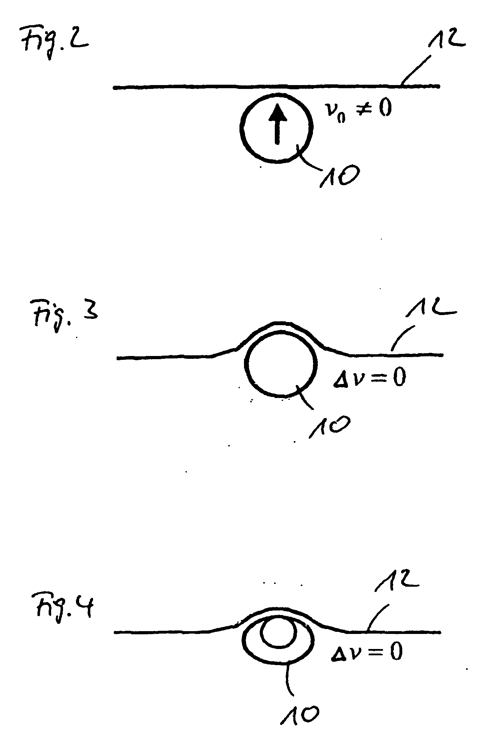

Figur 1 zeigt einen Abschnitt eines Kraftfahrzeugs mit einem erfindungsgemäßen System. Ein Kraftfahrzeug 12 mit einem Stoßfänger 20 und einer Motorhaube 60 ist dargestellt. Die Motorhaube 60 ist einmal mit durchgezogener Linie im geschlossenen Zustand dargestellt und weiterhin im angehobenen Zustand durch eine unterbrochene Linie. Dieses Anheben der Motorhaube 60 soll im Falle eines Zusammenstoßes mit einem Fußgänger erfolgen, damit auf diese Weise zusätzlicher Freiraum unter der Motorhaube geschaffen wird, so dass durch hierdurch entstehenden Deformationsweg der Aufprall des Fußgängers auf der Motorhaube 60 gedämpft wird. Das Anheben wird durch einen im Bereich der Anhebemechanik 58 angeordneten nicht dargestellten Aktuator bewirkt. Um den Aufprall des Fußgängers frühzeitig zu erkennen, sind am vorderen Ende des Stoßfängers 20 Sensoren 14 angeordnet. Diese erstrecken sich vorzugsweise über die gesamte Breite des Kraftfahrzeugs 12, das heißt über die Länge der Stoßstange 20, um einen Fußgängeraufprall an all diesen Stellen erfassen zu können.

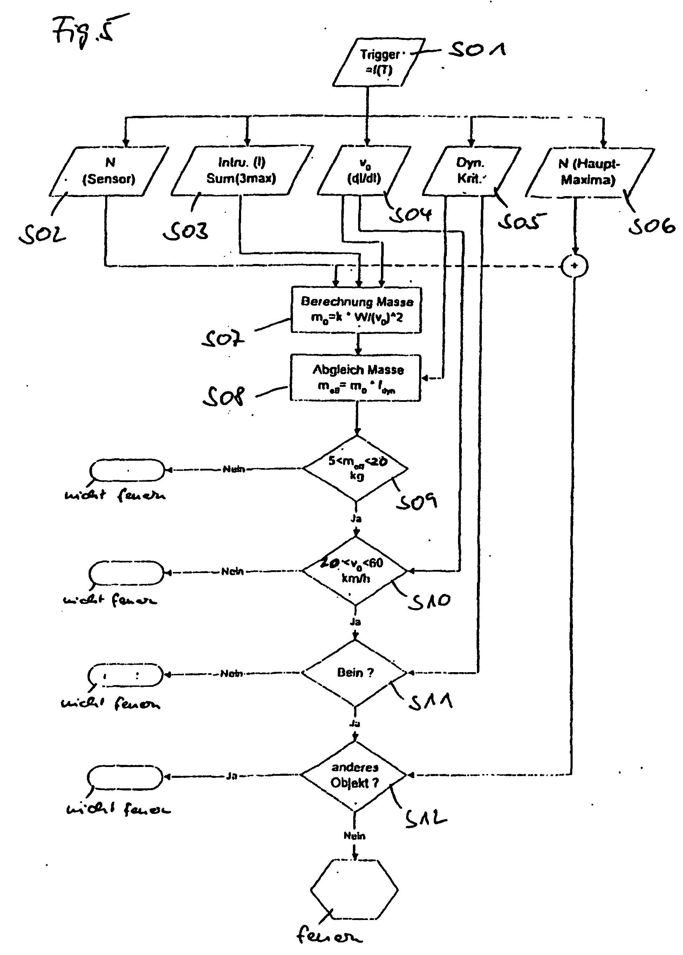

Figur 2 zeigt eine schematische Darstellung eines Objekts 10 vor dem Aufprall auf ein Fahrzeug 12. Da sich das Objekt 10 vor dem Aufprall auf das Fahrzeug 12 befindet, liegt eine Relativgeschwindigkeit $v_0 \neq 0$ vor, die im Moment des Aufpralls die Intrusionsgeschwindigkeit des Objekts 10 in das Fahrzeug 12 sein wird. Bei einem Objekt mit der Masse $m_0$ liegt somit eine kinetische Energie $E_{kin}$

$$E_{kin} = 0{,}5 \cdot m_0 \cdot v_0^2$$

vor.

Figur 3 zeigt eine schematische Darstellung eines Objekts 10 nach dem Aufprall auf ein Fahrzeug 12. Nach dem Aufprall des Objekts 10 auf das Fahrzeug 12 kann in guter Näherung davon ausgegangen werden, dass bei $\Delta v = 0$ die gesamte kinetische Energie in Deformationsarbeit $W_{Def}$ umgesetzt wird. Aus der Energiebilanz ergibt sich somit

$$m_0 = 2 \cdot \frac{W_{Def}}{v_0^2},$$

das heißt in verallgemeinerter Form eine lineare Beziehung zwischen einem Massenparameter $m_0$ und dem Quotienten aus der Deformationsarbeit $W_{Def}$ und dem Quadrat der Intrusionsgeschwindigkeit $v_0^2$ :

$$m_0 = k \cdot \frac{W_{Def}}{v_0^2},$$

wobei k eine Konstante ist.

Figur 4 zeigt eine schematische Darstellung eines weiteren Objekts 10 nach dem Aufprall auf ein Fahrzeug 12. Bei dem hier dargestellten Objekt 10 kann es sich beispielsweise um das deformierbare Bein eines Fußgängers handeln. Geht man von einer solchen Deformierbarkeit des Objekts 10 aus, so setzt sich die Deformationsarbeit aus der im Fahrzeug 12 deponierten Deformationsarbeit und der im Bein 10 deponierten Deformationsarbeit zusammen, das heißt:

$$W_{Def} = W_{Def / Fahrzeug} + W_{Def / Fußgänger}.$$

In guter Näherung kann auf der Grundlage diese Beziehung eine effektive Masse $m_{eff}$ über einen Dynamikfaktor definiert werden, so dass

$$m_{eff} = f_{dyn} \cdot m_0 .$$

Figur 5 zeigt ein Flussdiagramm zur Erläuterung eines erfindungsgemäßen Verfahrens. Nach einem Triggersignal, das in Schritt S01 aufgrund eines Aufpralls eines Objekts erzeugt wird, werden in den Schritten S02, S03, S04, S05 und S06 unterschiedliche Messwerte erfasst. In Schritt S02 wird die Anzahl der ansprechenden Sensoren erfasst. In Schritt S03 wird die Intrusionslänge auf der Grundlage einer Summation von drei Signalmaxima bestimmt. In Schritt S04 wird auf der Grundlage einer Zeitinformation die Intrusionsgeschwindigkeit ermittelt. Dynamische Besonderheiten des Aufpralls werden in Schritt S05 erfasst, insbesondere das Deformationsverhalten des aufprallenden Objekts. In Schritt S06 wird die Anzahl der Hauptmaxima der von den Sensoren erfassten Signale bestimmt.

Ausgehend von den in den Schritten S02, S03 und S04 bestimmten Parametern wird in Schritt S07 die Masse $m_0$ gemäß der Beziehung

$$m_0 = k \cdot \frac{W_{Def}}{v_0^2}$$

ermittelt.

Ausgehend von diesem Berechungsergebnis wird in Schritt S08 unter weiterer Berücksichtigung der dynamischen Kriterien aus Schritt S05 die effektive Masse $m_{eff}$ gemäß der Beziehung

$$m_{eff} = f_{dyn} \cdot m_0$$

ermittelt. Dieser effektive Massenparameter wird im weiteren Ablauf des Verfahrens verwendet. Ebenso ist es aber auch möglich, ohne Abgleich der Masse unter Berücksichtigung dynamischer Kriterien die direkt in Schritt S07 bestimmte Masse $m_0$ als Kriterium bei den nachfolgenden Entscheidungen zu verwenden.

In Schritt S09 wird bestimmt, ob die effektive Masse $m_{eff}$ in einem Massenfenster zwischen 5 kg und 20 kg liegt. Ist dies nicht der Fall, so wird entschieden, dass ein Fußgängerschutz nicht aktiviert wird ("nicht feuern").

Liegt hingegen die effektive Masse in dem vorgegebenen Intervall, so wird in Schritt S10 bestimmt, ob die Intrusionsgeschwindigkeit in einem vorgegebenen Geschwindigkeitsfenster zwischen 20 km/h und 60 km/h liegt. Ist die Intrusionsgeschwindigkeit kleiner als 20 km/h beziehungsweise größer als 60 km/h, so wird der Fußgängerschutz nicht aktiviert.

Liegt die Intrusionsgeschwindigkeit innerhalb des vorgegebenen Geschwindigkeitsfensters, so kann in Schritt S11 noch geprüft werden, ob es sich unter Berücksichtigung der aus Schritt S05 bereitgestellten dynamischen Kriterien mit großer Wahrscheinlichkeit beispielsweise um ein Bein handelt. Handelt es sich nicht um ein Bein, so kann der Fußgängerschutz, eventuell bei einem Rollstuhl nicht ausgelöst werden. Wird in Schritt S11 bestimmt, dass der Aufprall durch ein Bein bewirkt wurde, so kann zu Schritt S12 übergegangen werden. Die spezielle Auswertung in Schritt S11 kann bei fein abgestimmten Systemen eine zusätzliche Information bieten, wobei jedoch grundsätzlich eine Entscheidung allein auf der Grundlage des Massenparameters und der Intrusionsgeschwindigkeit in den meisten Fällen ausreichend ist.

Im Anschluss an eine positive Entscheidung aus Schritt S11 wird in Schritt S12 noch auf der Grundlage eines Vergleichs der Sensoranzahl aus Schritt S02 und der Anzahl der Hauptmaxima S06 ermittelt, ob der Aufprall mit großer Wahrscheinlichkeit durch ein anderes Objekt als durch das vorgegebene Objekt, beispielsweise durch ein Bein, bewirkt wurde. Wurde der Aufprall durch ein anderes Objekt bewirkt, so wird das Fußgängerschutzsystem nicht aktiviert. Wird jedoch ermittelt, dass es sich mit großer Wahrscheinlichkeit nicht um ein anderes Objekt handelt, so wird der Fußgängerschutz aktiviert.

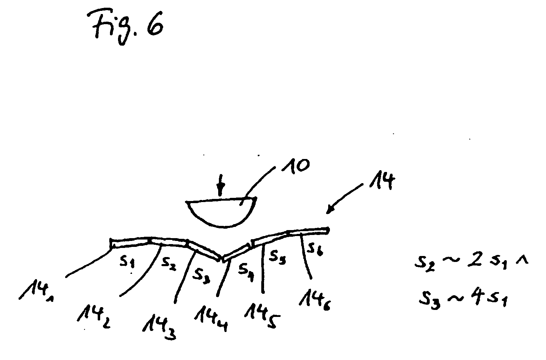

Figur 6 zeigt eine Kontaktsensoranordnung und ein eindringendes Objekt. Ein Objekt 10 kann beim Aufprall auf die Sensoren 14 eine bestimmte Deformation der Sensoren 14 bewirken, die in charakteristischer Weise von der Form des Objektes 10 abhängt. Die Sensoren $14_1$, $14_2$, $14_3$, $14_4$, $14_5$, $14_6$ werden in unterschiedlicher Weise durch den Aufprall des Objekts 10 deformiert, so dass diese auch unterschiedliche Signalintensitäten $s_1$, $s_2$, $s_3$, $s_4$, $s_5$ und $s_6$ liefern. Legt man die Sensoren 14 so aus, dass sie bei größerer verformung eine größere Signalintensität liefern, so kann im vorliegenden graphisch dargestellten Beispiel gelten, dass die Signalintensität $s_2$ des Sensors $14_2$ in etwa n mal so groß ist wie die Signalintensität $s_1$ des Sensors $14_1$. Zusätzlich gilt, dass die Signalintensität $s_3$ des Sensors $14_3$ in etwa m mal so groß ist wie die Signalintensität $s_1$ des Sensors $14_1$, wobei n und m bekannte Faktoren sind, beispielsweise 2 und 4. Gleiches gilt für die Beziehung der Signalintensitäten $s_4$, $s_5$, $s_6$ der Sensoren $14_4$, $14_5$, $14_6$. Somit liegt in diesem vereinfachten Beispiel eine charakteristische Beziehung zwischen den Signalintensitäten vor, die ebenso charakteristisch für eine bestimmte Objektart sein kann, beispielsweise das Bein eines Fußgängers.

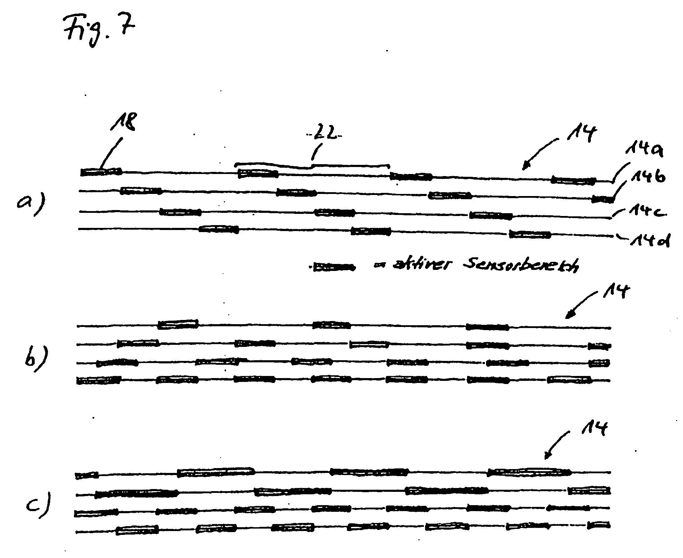

Figur 7 zeigt drei Beispiele von Kontaktsensoranordnungen mit mehreren sensitiven beziehungsweise aktiven Bereichen. Es sind Ausschnitte von Sensoren dargestellt, die beispielsweise entlang dem Stoßfänger eines Kraftfahrzeugs angeordnet sein können. Der Blick in Figur 7 ist von vorne auf den Stoßfänger gerichtet. Die einzelnen Sensoren 14a, 14b, 14c, 14d können eine andere Länge aufweisen als dargestellt. Ebenfalls kann eine andere Anzahl an Einzelsensoren 14a, 14b, 14c, 14d als dargestellt vorliegen. Jeder einzelne Sensor 14 hat mehrere aktive Sensorbereiche 18. Beispielsweise können 30 solcher aktiven beziehungsweise sensitiven Sensorbereiche 18 pro Sensor 14 vorgesehen sein.

In Figur 7a ist eine Anordnung dargestellt, bei der sich die sensitiven Bereiche 18 regelmäßig entlang den Sensoren 14 wiederholen. Weiterhin kann man Sensoranordnungen 22 über die verschiedenen Sensoren definieren, die sich ebenfalls regelmäßig wiederholen. Bei diesem Beispiel wird ein Objekt, das in bestimmter Weise bezüglich irgendeiner der sich wiederholenden Sensoranordnungen 22 auftrifft, stets dasselbe Signalmuster erzeugen. Das Signalmuster gibt also keine Information darüber, welche der sich wiederholenden Anordnungen 22 getroffen wurde. Es wird jedoch die Information über die Charakteristik des Aufpralls erfasst.

In Figur 7b sind die sensitiven Bereiche 18 ebenfalls regelmäßig über die einzelnen Sensoren 14 verteilt. Allerdings sind die Abstände der sensitiven Bereiche 18 auf den einzelnen Sensoren unterschiedlich. Somit würde eine solche Sensoranordnung beim Auftreffen eines Objekts andere Intensitätsmuster liefern, als beim Auftreffen des Objekts auf eine Sensoranordnung gemäß Figur 7, wobei durch geschickte Anordnung der sensitiven Bereiche 18 unterschiedliche Informationen über die Charakteristik des Aufpralls erhalten werden können.

Figur 7c zeigt noch eine andere Variante der Anordnung sensitiver Bereiche 18 auf den Sensoren 14, wobei hier besonders zu erwähnen ist, dass sensitive Bereiche 18 mit unterschiedlichen Ausdehnungen vorgesehen sind.

Neben den in Figur 7 angegebenen Anordnungen von Sensoren 14 und sensitiven Bereichen 18 der Sensoren sind zahlreiche weitere Möglichkeiten denkbar, die unterschiedliche Vorteile mit sich bringen können. Beispielsweise ist es möglich, dass die Sensoren 14 nicht geradlinig angeordnet sind, so dass auf diese weise die sensitiven Bereiche 18 der Sensoren nebeneinander, das heißt in derselben Höhe liegen können.

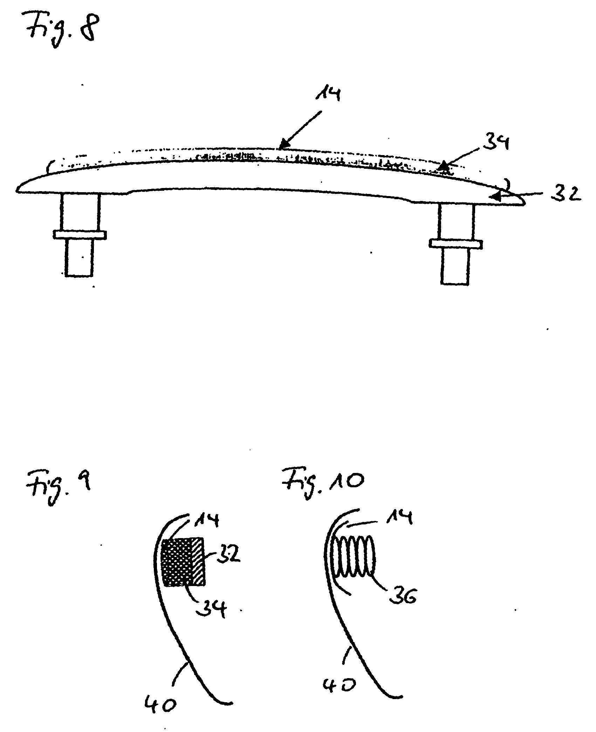

Figur 8 zeigt eine Draufsicht auf das vordere Ende eines Kraftfahrzeugs zur Erläuterung der Anordnung von Sensoren 14. Auf einem Querträger 32 ist ein elastischer Schaum 34 angeordnet. Dieser Schaum 34 hat beispielsweise eine Dicke von 60 bis 70 mm. Auf dem Schaum 34 folgen als nächste Schicht die optischen Fasersensoren 14. Diese können beispielsweise auf einem Stahlband angeordnet sein, so dass insgesamt eine Dicke der Sensorschicht von beispielsweise 1,5 bis 2 mm vorliegt.

Auf die optischen Fasersensoren 14 kann noch eine Kunststoffaußenhaut folgen, die in der vorliegenden Darstellung nicht gezeigt ist und eine Dicke von beispielsweise 2 bis 3 mm aufweisen kann.

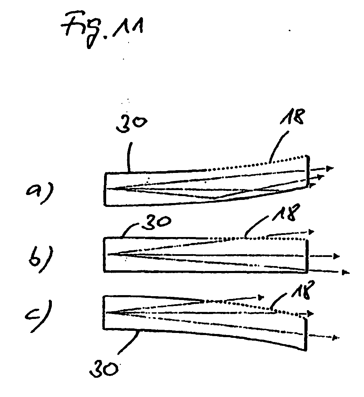

Figur 9 zeigt eine geschnittene Seitenansicht eines vorderen Endes eines Kraftfahrzeugs zur Erläuterung der Bereitstellung einer Verformbarkeit. Es ist eine Möglichkeit dargestellt, wie der für die Deformation benötigte Deformationsweg zur Verfügung gestellt werden kann, indem nämlich der optische Sensorbereich 14 auf einer auf einem Träger 32 angeordneten Schaumschicht 34, die für den Schutz des Beines notwendig ist, montiert ist. Über den optischen Sensoren 14 befindet sich eine Kunststoffschicht 40.

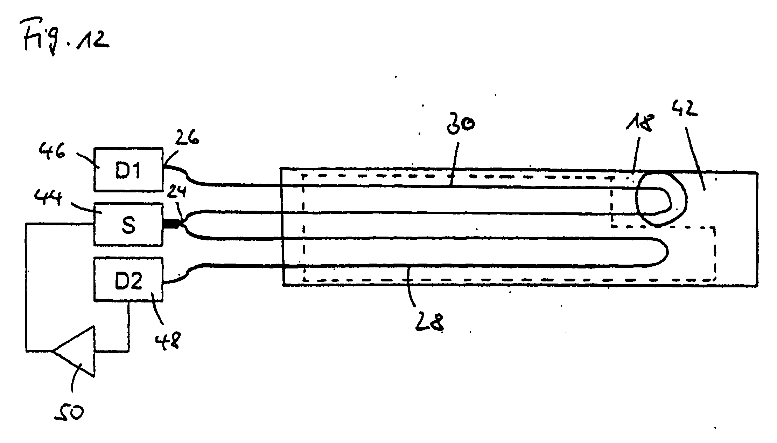

Figur 10 zeigt eine geschnittene Seitenansicht eines vorderen Bereiches eines Kraftfahrzeugs zur Erläuterung einer weiteren Möglichkeit zur Bereitstellung einer Verformbarkeit. Hier ist eine andere Möglichkeit der Anordnung der optischen Sensoren 14 im Fahrzeug dargestellt. Es ist ebenfalls wieder eine Kunststoffschicht 40 als Außenhaut vorgesehen. Darunter befinden sich die Sensoren 14 auf einer Crash-Box 36. Die Crash-Box stellt bis zu einer gewissen auf sie ausgeübten Kraft ein elastisches Deformationsverhalten zur Verfügung, so dass auf der Grundlage der Deformation der optischen Sensoren 14 eine Detektion erfolgen kann.

Figur 11 zeigt einen Ausschnitt aus einem optischen Fasersensor 30 mit einem sensitiven Bereich in drei verschiedenen Zuständen a, b und c. Der optische Fasersensor 30 hat einen sensitiven Bereich 18, der durch Oberflächenbehandlung zur Verfügung gestellt werden kann. Durch die Bereitstellung eines solchen sensitiven Bereiches 18 kann die aus dem optischen Fasersensor 30 austretende Lichtintensität in diesem sensitiven Bereich 18 verändert werden. Dies hat zur Folge, dass die austretende Lichtintensität vom Deformationszustand des Fasersensors 30 abhängt. Bei dem Deformationszustand gemäß Figur 11a wird die aus dem sensitiven Bereich 18 austretende Lichtintensität 18 im Vergleich zum nicht deformierten Zustand gemäß Figur 11b erniedrigt. Im Gegensatz hierzu wird bei dem Beispiel gemäß Figur 11c die aus dem sensitiven Bereich 18 austretende Lichtintensität im Vergleich zu dem nicht deformierten Zustand gemäß Figur 11b erhöht.

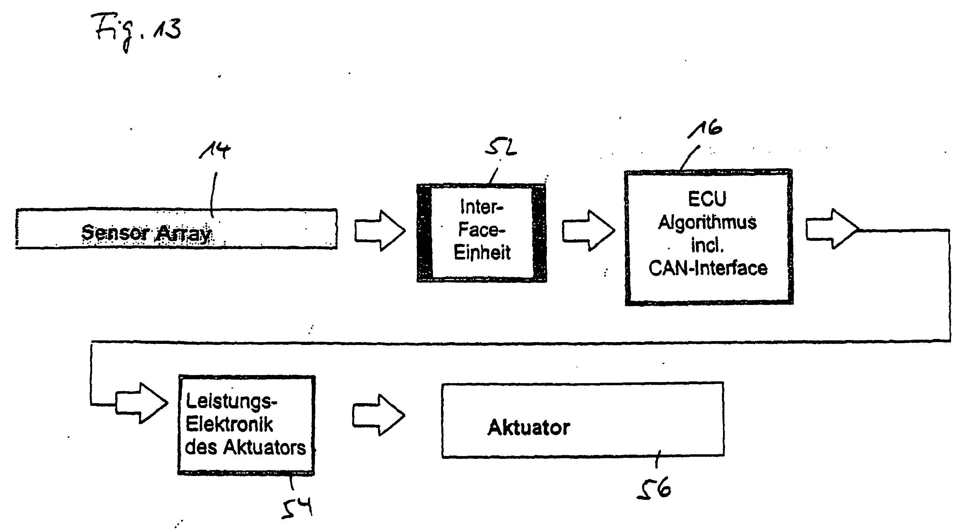

Figur 12 zeigt eine Anordnung optischer Fasersensoren mit Lichtquelle 44 und Detektoren 46, 48. In einem Trägermaterial 42 sind zwei optische Fasersensoren 28, 30 angeordnet. Der optische Fasersensor 28 ist nicht mit einem sensitiven Bereich ausgestattet, während der optische Fasersensor 30 mit einem sensitiven Bereich 18 versehen ist; dies ist durch die unterbrochene Linie im Trägermaterial 42 angedeutet. Koppelt man nun Licht aus einer Lichtquelle 44 an einem Ende 24 des optischen Fasersensors 30 ein, so wird das Licht durch den optischen Fasersensor 30 geleitet, und es gelangt schließlich mit einer verbleibenden Intensität zum anderen Ende 26 des optischen Fasersensors 30. Dort kann von einem Detektor 46 die Lichtintensität gemessen werden. Wird nun der sensitive Bereich 18 des optischen Fasersensors 30 deformiert, so hat dies einen Einfluss auf die in diesem Bereich austretende Lichtintensität und somit auch auf die von dem Detektor 46 bei gegebener eingekoppelter Lichtintensität aus der Lichtquelle 44 nachgewiesene Intensität. Um zuverlässige Messergebnisse zur Verfügung zu stellen, ist es möglich, parallel zu dem optischen Fasersensor 30 einen weiteren optischen Fasersensor 28 anzuordnen, wobei dieser jedoch keinen sensitiven Bereich aufweist. Koppelt man in diesen optischen Leiter 28 Licht aus derselben Lichtquelle 44 ein, die auch für den optischen Fasersensor 30 verwendet wird, so kann das von dem Detektor 48 ausgegebene Intensitätssignal über eine entsprechende elektronische Schaltung, die hier durch einen Verstärker 50 symbolisiert ist, als Eingangssignal für die Lichtquelle 44 und somit zur Darstellung einer Bezugsschaltung verwendet werden. Somit können beispielsweise Schwankungen der von der Lichtquelle 44 abgegebenen Intensität kompensiert werden.

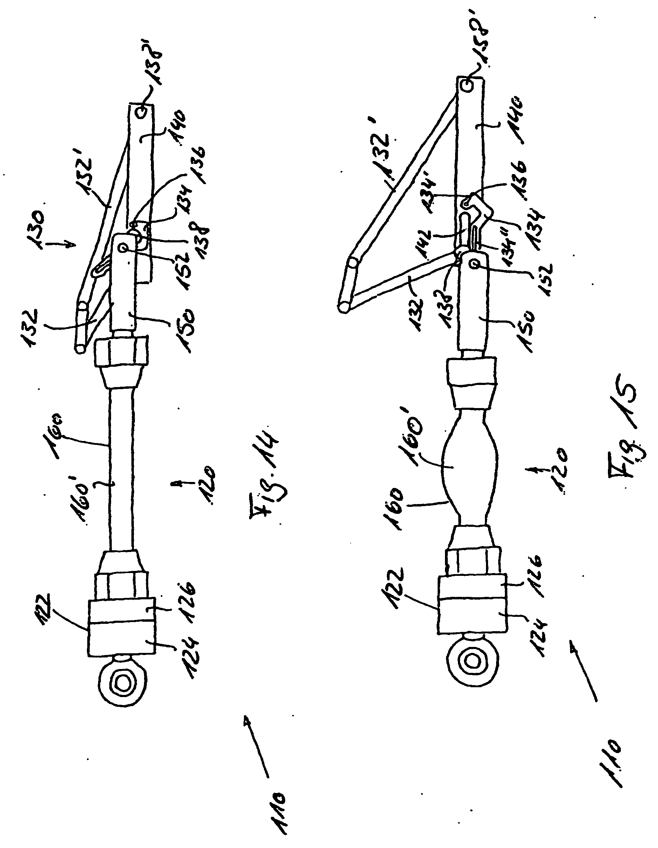

Figur 13 zeigt ein Blockdiagramm zur Erläuterung des Systemaufbaus. Das erfindungsgemäße System ordnet sich in der Weise in ein Gesamtkonzept ein, dass die Sensoranordnung 14 über eine Schnittstelleneinrichtung 52 mit einer elektronischen Steuereinheit 16 kommuniziert. Diese elektronische Steuereinheit 16 kann eine CAN-Schnittstelle umfassen, so dass von der elektronischen Steuereinheit 16 zusätzliche auf dem CAN-Bus zur Verfügung stehende Informationen verarbeitet werden können. Ebenfalls können dem CAN-Bus auf diese Weise von der Sensoranordnung 14 erfasste Informationen eingegeben werden. Die elektronische Steuereinheit 14 steuert eine Leistungselektronik 54 an, die in Abhängigkeit der von der Sensoranordnung 14 erfassten Informationen einen Aktuator 56 betätigen kann. Dieser kann dann im Falle eines Fußgängeraufpralls das in Figur 1 dargestellte Aufstellen der Motorhaube bewirken.

Figur 14 zeigt eine Seitenansicht einer bevorzugten Anhebemechanik für ein erfindungsgemäßes Fußgängerschutzsystem in der Ruheposition. Die Sicherheitseinrichtung 110 umfasst eine Betätigungseinrichtung 120 und eine Vorrichtung 130 zum Anheben einer nicht dargestellten Motorhaube eines Kraftfahrzeugs. Die Betätigungseinrichtung 120 weist im Wesentlichen eine Druckversorgungseinrichtung 122 und einen Aktor 160 auf, welcher einen radial und axial elastischen Schlauch 160' umfasst. Die Druckversorgungseinrichtung 122 ist mittels eines Hochgeschwindigkeitsventils 126 mit dem Aktor 160 verbunden. Die Vorrichtung 130 zum Anheben der Motorhaube steht mit der Betätigungsvorrichtung 120 mittels eines Zwischenelements 150 in Verbindung und weist zwei Motorhaube-Halteelemente 132 und 132' auf, welche als zwei Schenkel einer trapezförmigen Halterung dargestellt sind. Die beiden Hauben-Halteelemente 132 und 132' sind durch eine Halteelement-Achse 138 beziehungsweise 138' mit einem Tragelement 140 schwenkbar verbunden.

Die Vorrichtung 130 weist weiterhin einen Riegel 134 auf, welcher mittels eines Lagers 136 mit dem Tragelement 140 drehbar verbunden ist und mittels einer Zwischenelement-Achse 152 mit dem Zwischenelement 150 in Verbindung steht. Die Sicherheitseinrichtung ist in einer inaktiven Position dargestellt, bei der die Halteelement-Achse 138 als Riegelgegenstück dient.

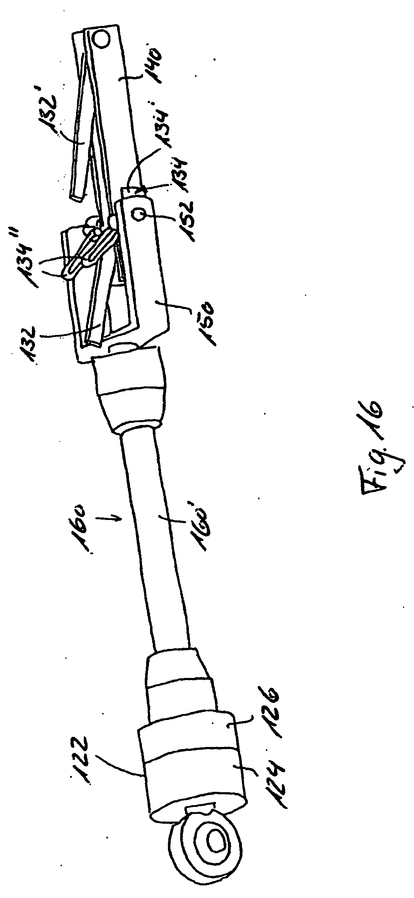

Figur 15 zeigt eine Seitenansicht der in Figur 14 gezeigten Ausführungsform in der Arbeitsposition. Der Riegel 134 weist einen ersten Riegelteil 134' auf, welcher eine im Wesentlichen U-förmige Ausbildung hat, sowie einen zweiten Riegelteil 134'', welcher schienenartig ausgebildet ist. Bei einer Druckbeaufschlagung infolge eines Aufpralls auf das Fahrzeug wird die Sicherheitseinrichtung 110 aktiviert. Hierzu wird das Ventil 126 durch eine hier nicht dargestellte Steuereinheit geöffnet, so dass das in der Druckversorgungseinrichtung 122 bevorratete Druckmedium durch das Ventil 126 in den Schlauch 160' des pneumatischen Aktors 160 einströmt. Der Durchmesser des Schlauches 160' vergrößert sich dabei infolge des einströmenden Druckmediums bei einer gleichzeitigen Kontraktion in Längsrichtung des Schlauches 160'. Das Zwischenelement 150 folgt die Kontraktion des Schlauches 160', wobei die Zwischenelement-Achse 152 infolge der Verschiebung in dem zweiten schienenförmig ausgebildeten Teil 134'' des Riegels 134 läuft. Die mit der Zwischenelement-Achse 152 verbundene Halteelement-Achse 138, welche als Riegelgegenstück dient, gleitet gleichzeitig in dem Schlitz 142, und somit wird der Riegel 134 in einem Entriegelungszustand gebracht. Bei dieser Drehung und linearen Verschiebung der Halteelement-Achse 138 und der Zwischenelement-Achse wird der schienenförmig ausgebildete Teil 134'' des Riegels 134 in eine Stellung gebracht, die parallel zu dem Schlitz 142 des Tragelements 140 ist. Somit erreichen die Halteelement-Achse 138 und die Zwischenelement-Achse 152 eine Endposition des Schlitzes 142 bzw. des schienenförmigen Teils 134''. Die Hauben-Halteelemente 132 und 132' heben bei dieser Drehung und linearen Verschiebung die nicht dargestellte Motorhaube in eine erhöhte Position an, so dass für den Aufprall des Fußgängers zusätzlicher Deformationsweg zur Verfügung gestellt wird.

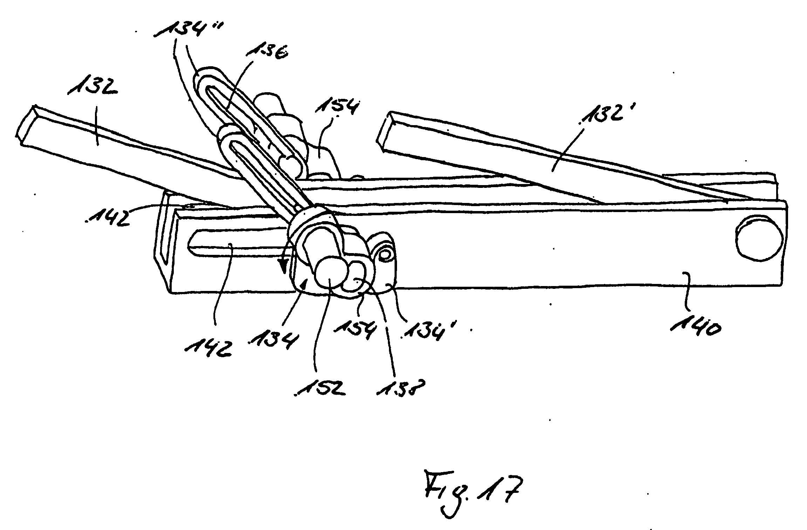

Figur 16 zeigt eine perspektivische Darstellung einer bevorzugten Anhebemechanik in der Ruheposition. Bei dieser Ausführungsform ist die Haubenhalterung durch das Tragelement 140 und den beiden Hauben-Halteelemente 132 und 132' gebildet. Das Tragelement 140 weist einen U-förmigen Querschnitt auf, wobei die Hauben-Halteelemente 134, 134' derart dimensioniert sind, dass sie zwischen die beiden einander gegenüberliegenden U-Teile des im Querschnitt U-förmigen Tragelementes 140 einbringbar sind.

Figur 17 zeigt eine vergrößerte perspektivische Darstellung der Vorrichtung zum Anheben der Motorhaube gemäß Figur 16 in Ruheposition. Das Tragelement 140 weist seitlich Schlitze 142 auf, in welchen die Zwischenelement-Achse 152 bei Betätigung der Vorrichtung 130 gleitet. Bei dieser Figur ist eine Achsenverbindung 154 dargestellt, welche die Halteelement-Achse 138 und die Zwischenelement-Achse 152 verbindet. Beim Anheben der Motorhaube drehen sich die beiden Achsen 138 und 152 im Uhrzeigergegensinn, wie durch den Pfeil gezeigt.

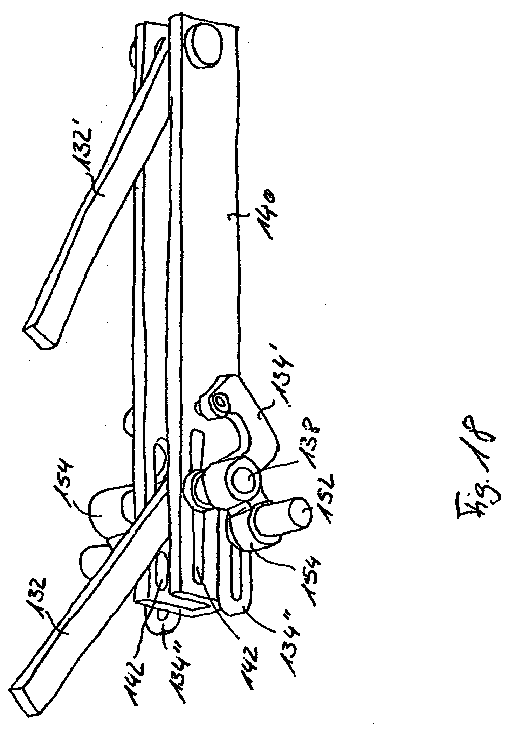

Figur 18 zeigt eine vergrößerte perspektivische Darstellung der Vorrichtung zum Anheben der Motorhaube mit einem Zwischenelement gemäß Figur 16 in der Arbeitsposition. Durch die Achsenverbindung 154 wird erreicht, dass die Halteelement-Achse 138 exakt in dem Schlitz 142 des Tragelements 140 gleitet. Gleichzeitig wird erreicht, dass die Zwischenelement-Achse 152 in der Schiene des schienenförmigen Teils 134'' des Riegels 134 gleitet. In der Arbeitsposition liegt der schienenförmige Teil 134'' des Riegels parallel zu dem Schlitz 142 des Tragelements 140. Dabei werden sowohl der Schlitz 142, als auch der Teil 134'' derart aufeinander abgestimmt, dass die Halteelement-Achse 138 und die Zwischenelement-Achse 152 bis zur Endposition in dem Schlitz 142 bzw. in der Schiene des schienenförmigen Teils 134'' laufen.

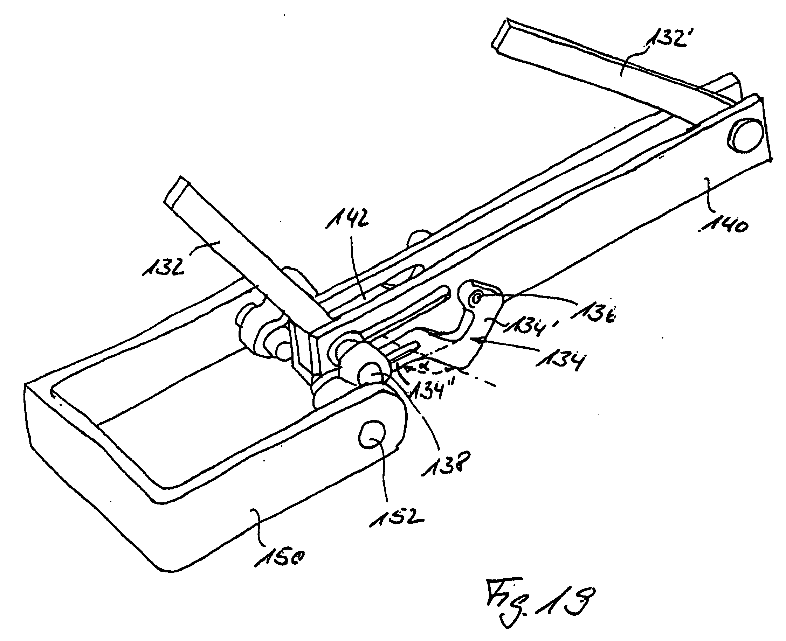

Figur 19 zeigt eine vergrößerte perspektivische Darstellung der Vorrichtung zum Anheben der Motorhaube mit einem zwischenelement gemäß Figur 16 in der Endposition. Die Halteelement-Achse 138 und die Zwischenelement-Achse 152 befinden sich an einem der Betätigungsvorrichtung zugewandten Ende des Schlitzes 142 bzw. des schienenförmigen Teils 134''. Die Teile 134' und 134'' des Riegels 134 sind bei dieser Ausführungsform derart ausgebildet, dass der Winkel $\alpha$ größer als 90° ist.

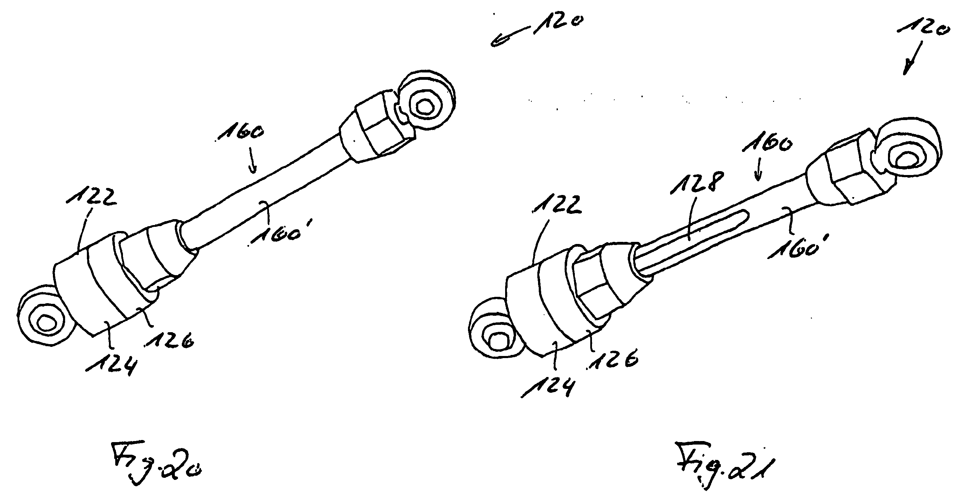

Die Figuren 20 und 21 zeigen perspektivische Darstellungen einer Betätigungsvorrichtung 120 in einer ersten Ausführungsform in der Ruheposition jeweils ohne und mit einem Druckspeicher 128, welcher zur Reduzierung des Totvolumens in dem Schlauch 160' angeordnet ist.

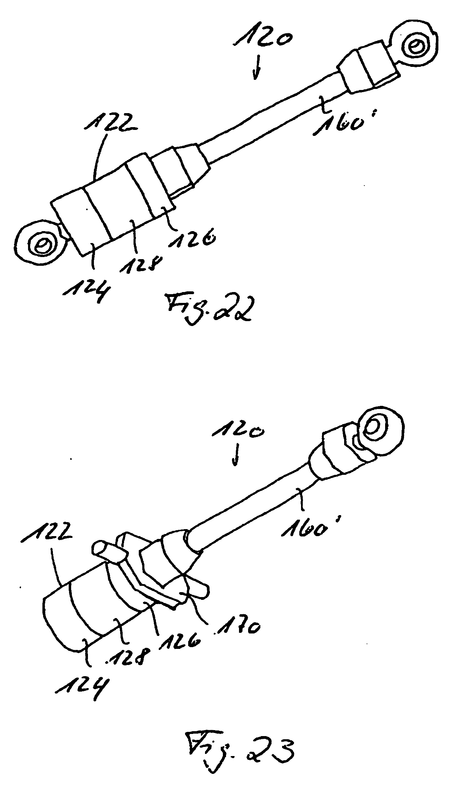

Die Figuren 22 und 23 zeigen perspektivische Darstellungen einer Betätigungsvorrichtung 120 in einer zweiten Ausführungsform in der Ruheposition jeweils ohne und mit einer Pendelanbindung 170. Bei dieser Ausführungsform ist der Druckspeicher 128 zwischen der Mikropumpe 124 und dem Ventil 126 angeordnet.

Die Erfindung lässt sich wie folgt zusammenfassen. Ein Fußgängerschutzsystem umfasst eine Sensorik 14, 30, eine Auswerteeinheit 16 und eine Anhebemechanik 110 für eine Motorhaube. Indem beim Aufprall eines Objekts die Deformationsarbeit ermittelt wird und die Intrusionsgeschwindigkeit bestimmt wird, kann ein die Masse des Objekts kennzeichnender Parameter ermittelt werden. Der Fußgängerschutz erfolgt durch Anheben der Motorhaube, da auf diese Weise zusätzlicher Deformationsweg für einen aufschlagenden Fußgänger zur Verfügung gestellt wird. Ob dieser Fußgängerschutz aktiviert werden darf, wird von der Masse und vorzugsweise der Intrusionsgeschwindigkeit sowie von weiteren Größen abhängig gemacht.

**Patentansprüche**

1. Fußgängerschutzsystem für ein Fahrzeug, mit

   - einer Sensorik (14, 30) zum Erfassen einer durch einen Aufprall eines Objekts (10) auf das Fahrzeug (12) bewirkten Deformation,
   - Mitteln (16) zum Auswerten der von der Sensorik (14, 30) gelieferten Signale, so dass Informationen über die Charakteristik des Aufpralls geliefert werden können, und
   - einer Vorrichtung (130) zum Anheben einer Haube, insbesondere einer Motorhaube, des Fahrzeugs (12), die in Abhängigkeit der Informationen über die Charakteristik des Aufpralls betätigt werden kann,
   **dadurch gekennzeichnet,**
   - **dass** die Mittel (16) zum Auswerten der bewirkten Deformationen eine Deformationsarbeit ermitteln können,
   - **dass** die Mittel (16) zum Auswerten unter Berücksichtigung von Zeitinformation, die von der Sensorik (14, 30) erfasst wird, eine Intrusionsgeschwindigkeit des Objekts (10) ermitteln können,
   - **dass** unter Berücksichtigung der Deformationsarbeit und der Intrusionsgeschwindigkeit ein die Masse des Objekts (10) kennzeichnender Parameter ermittelbar ist und
   - **dass** die Intrusionsgeschwindigkeit und die Masse des Objekts (10) berücksichtigt werden, um zu entscheiden, ob die Vorrichtung (30) zum Anheben der Haube betätigt wird.

2. Fußgängerschutzsystem nach Anspruch 1,
   **dadurch gekennzeichnet,**
   **dass** die Mittel (16) zum Auswerten die Deformationsarbeit auf der Grundlage einer gespeicherten Tabelle und/oder Berechnung ermitteln.

3. Fußgängerschutzsystem nach Anspruch 1 oder 2,
**dadurch gekennzeichnet,**
**dass** der die Masse des Objekts (10) kennzeichnende Parameter ($m_0$) nach der Beziehung

$$m_0 \ = \ k \ \cdot \ \frac{W_{Def}}{v_0^2}$$

berechenbar ist, wobei

$m_0$ : Masse,
$W_{Def}$ : Deformationsarbeit,
$v_0$ : Intrusionsgeschwindigkeit, beim ersten Kontakt zu einem Zeitpunkt $t_0$,
k : Konstante.

4. Fußgängerschutzsystem nach einem der vorhergehenden Ansprüche,
**dadurch gekennzeichnet,**
**dass** aus dem die Masse des Objekts (10) kennzeichnenden Parameter ($m_0$) eine effektive Masse ($m_{eff}$) nach der Beziehung

$$m_{eff} \ = \ f_{dyn} \ \cdot \ m_0$$

berechenbar ist, wobei

$m_0$ : Masse,
$m_{eff}$ : effektive Masse,
$f_{dyn}$ : Dynamikfaktor.

5. Fußgängerschutzsystem nach einem der vorhergehenden Ansprüche,
**dadurch gekennzeichnet,**

- **dass** bei einer Masse $m_0$ beziehungsweise einer effektiven Masse ($m_{eff}$) zwischen ca. 5 kg und 20 kg ein Aktivieren eines Fußgängerschutzes möglich ist und
- **dass** bei einer Masse ($m_0$) beziehungsweise einer effektiven Masse ($m_{eff}$) kleiner als ca. 5 kg und größer als 20 kg ein Aktivieren eines Fußgängerschutzes verhindert wird.

6. Fußgängerschutzsystem nach einem der vorhergehenden Ansprüche,
**dadurch gekennzeichnet,**

- **dass** bei einer Intrusionsgeschwindigkeit zwischen ca. 20 km/h und 60 km/h ein Aktivieren eines Fußgängerschutzes möglich ist und
- **dass** bei einer Intrusionsgeschwindigkeit kleiner als ca. 20 km/h und größer als 60 km/h ein Aktivieren eines Fußgängerschutzes verhindert wird.

7. Fußgängerschutzsystem nach einem der vorangehenden Ansprüche,
**dadurch gekennzeichnet,**
**dass** die Sensorik mehrere Sensoren (14, 30) mit mehreren sensitiven Bereichen (18) umfasst, wobei sich die sensitiven Bereiche (18) an verschiedenen Orten des Fahrzeugs (12), insbesondere der Fahrzeugfront, befinden.

8. Fußgängerschutzsystem nach einem der vorangehenden Ansprüche,
**dadurch gekennzeichnet,**
**dass** die Sensoren (14, 30) beziehungsweise die sensitiven Bereiche (18) der Sensoren (14, 30) entlang einem Stoßfänger (20) des Fahrzeugs (12) angeordnet sind.

9. Fußgängerschutzsystem nach einem der vorangehenden Ansprüche,

**dadurch gekennzeichnet,**
**dass** die einem Sensor (14, 30) zugehörigen sensitiven Bereiche (18) in regelmäßigen Abständen entlang einem Stoßfänger (20) des Fahrzeugs (12) angeordnet sind.

10. Fußgängerschutzsystem nach einem der vorangehenden Ansprüche,
**dadurch gekennzeichnet,**
**dass** sensitive Bereiche (18) benachbarter Sensoren (14a, 14b, 14c, 14d) zueinander versetzt beziehungsweise nebeneinander angeordnet sind, so dass beim Aufprall eines Objekts (10) von benachbarten Sensoren (14a, 14b, 14c, 14d) Signale mit unterschiedlichen Intensitäten geliefert werden.

11. Fußgängerschutzsystem nach einem der vorangehenden Ansprüche,
**dadurch gekennzeichnet,**

- **dass** die Sensoren (14) optische Fasersensoren (30) sind, an deren einem Ende (24) Licht eingekoppelt werden kann und an deren anderem Ende (26) die Intensität von austretendem Licht gemessen werden kann,
- **dass** die sensitiven Bereiche (18) der Sensoren (14) durch Veränderung der Oberfläche der optischen Fasersensoren (30) geschaffen sind und
- **dass** in Abhängigkeit der Deformation der sensitiven Bereiche (18) mehr oder weniger Licht aus den sensitiven Bereichen (18) ausgekoppelt werden kann, so dass die gemessene Intensität von austretendem Licht als Maß für die Deformation der sensitiven Bereiche (18) verwendet werden kann.

12. Fußgängerschutzsystem nach einem der vorangehenden Ansprüche,
**dadurch gekennzeichnet,**

- **dass** eine Betätigungsvorrichtung (120) vorgesehen ist, welche eine Druckversorgungseinrichtung (122) und einen mit der Druckversorgungseinrichtung (122) mittels eines Ventils (126) verbundenen Aktor (160), insbesondere einen pneumatischen Aktor aufweist,
- **dass** die Vorrichtung (130) zum Anheben der Haube mit der Betätigungsvorrichtung (120) verbindbar ist und durch Druckbeaufschlagung des Aktors (160) betätigbar ist und
- **dass** die Vorrichtung (130) zum Anheben der Motorhaube wenigstens ein Hauben-Halteelement (132, 132') und wenigstens einen Riegel (134) aufweist, wobei bei Betätigung der Vorrichtung (130) das Hauben-Halteelement (132, 132') in eine Entriegelungsstellung verstellbar ist.

13. Fußgängerschutzsystem nach Anspruch 12,
**dadurch gekennzeichnet,**
**dass** die Betätigungsvorrichtung (120) und die Vorrichtung (130) zum Anheben der Motorhaube mittels eines Zwischenelementes (150) miteinander verbunden sind.

14. Fußgängerschutzsystem nach Anspruch 12 oder 13,
**dadurch gekennzeichnet,**
**dass** das Hauben-Halteelement (132, 132') um eine Halteelement-Achse (138) schwenkbar ist und mit einem Tragelement (140) verbunden ist, wobei das Tragelement (140) wenigstens einen, vorzugsweise zwei Schlitze (142) aufweist, in dem die Halteelement-Achse (138) in einen Entriegelungs- beziehungsweise einen Verriegelungszustand gleitet.

15. Fußgängerschutzsystem nach Anspruch 14,
**dadurch gekennzeichnet,**
**dass** der Schlitz (142) an einem Ende des Tragelementes (140) vorgesehen ist, welches der Betätigungsvorrichtung (120) zugewandt ist, wobei der Schlitz (142) derart dimensioniert ist, dass seine Länge der Verkürzung des Aktors (160) bei einer Druckbeaufschlagung im Wesentlichen entspricht.

16. Fußgängerschutzsystem nach einem der Ansprüche 12 bis 15,
**dadurch gekennzeichnet,**
**dass** der wenigstens eine Riegel (134) derart ausgebildet ist, dass ein erster Teil (134') des Riegels (134) im Wesentlichen U-förmig ausgebildet ist und mit dem Tragelement (140) schwenkbar verbunden ist und ein zweiter Teil (134'') des Riegels (134) mittels einer Zwischenelement-Achse (152) mit dem Zwischenelement (150) verbindbar ist.

**17.** Fußgängerschutzsystem nach 16,
**dadurch gekennzeichnet,**
**dass** der zweite Teil des wenigstens einen Riegels (134) schienenförmig ausgebildet ist und die Zwischenelement-Achse (152) bei einer Druckbeaufschlagung in der Schiene läuft.

**18.** Fußgängerschutzsystem nach Anspruch 16 oder 17,
**dadurch gekennzeichnet,**
**dass** die Halteelement-Achse (138) und die Zwischenelement-Achse (152) an ihren beiden Enden fest mittels mindestens einer Achsenverbindung (154) miteinander verbunden sind.

**19.** Fußgängerschutzsystem nach einem der Ansprüche 16 bis 18,
**dadurch gekennzeichnet,**
**dass** der zweite Teil (134'') des wenigstens einen Riegels (134) einteilig mit dem ersten im Wesentlichen U-förmigen Teil (134') des Riegels (134) ausgebildet ist, wobei der zweite Teil (134'') als Verlängerung von einem der einander gegenüberliegenden U-Teile ausgebildet ist und in Bezug auf diesen U-Teil einen Winkel $\alpha$ einschließt, wobei $\alpha$ gleich oder vorzugsweise größer als 90° ist.

**20.** Fußgängerschutzsystem nach einem der Ansprüche 14 bis 19,
**dadurch gekennzeichnet,**
**dass** ein zweites Hauben-Halteelement (132') vorgesehen ist, welches an einem der Betätigungsvorrichtung (120) abgewandten Ende des Tragelements (140) schwenkbar befestigt ist, wobei die beiden Hauben-Halteelemente (132, 132') synchron betätigbar sind.

**21.** Fußgängerschutzsystem nach einem der Ansprüche 16 bis 20,
**dadurch gekennzeichnet,**
**dass** das U-förmige Teil (134') des Riegels (134) und die Halteelement-Achse (138) derart dimensioniert sind, dass in Verriegelungsposition die Halteelement-Achse (138) mit dem U-förmigen Teil (134') des Riegels (134) form- und/oder kraftschlüssig zusammenwirkt.

**22.** Fußgängerschutzsystem nach Anspruch 20 oder 21,
**dadurch gekennzeichnet,**
**dass** die Hauben-Halteelemente (132, 132') derart miteinander verbunden sind, dass eine trapezförmige Haubenhalterung gebildet ist.

**23.** Fußgängerschutzsystem nach einem der Ansprüche 12 bis 22,
**dadurch gekennzeichnet,**
**dass** die Druckversorgungseinrichtung (122) der Betätigungsvorrichtung (120) eine Pumpe (124), insbesondere eine Mikropumpe, und einen zwischen der Pumpe (124) und dem Ventil (126) angeordneten Druckspeicher (128) aufweist, wobei das Ventil (126) ein Hochgeschwindigkeitsventil ist.

**24.** Fußgängerschutzsystem nach einem der Ansprüche 12 bis 23,
**dadurch gekennzeichnet,**
**dass** die Druckversorgungseinrichtung (122) der Betätigungseinrichtung (120) eine Pumpe, insbesondere eine Mikropumpe (124) aufweist, welche mit dem Ventil (126) verbunden ist, wobei ein Druckspeicher (128) vorgesehen ist, welcher sich zur Reduzierung des von der Druckversorgungseinrichtung (122) beanspruchten Bauraums in den Aktor (160) erstreckt.

**25.** Fußgängerschutzsystem nach einem der Ansprüche 13 bis 24,
**dadurch gekennzeichnet,**
**dass** der Aktor (160) einerseits fest mit der Druckversorgungseinrichtung (122) verbunden ist, wobei vorzugsweise eine Pendelanbindung vorgesehen ist, und andererseits mittels des Zwischenelements (150) mit der Betätigungseinrichtung (120) verbunden ist.

**26.** Fußgängerschutzsystem nach einem der Ansprüche 12 bis 25,
**dadurch gekennzeichnet,**
**dass** der Aktor (160) durch Druckluft, Gas oder Flüssigkeit betätigbar ist.

**27.** Verfahren zum Schutz von Fußgängern mit einem Fußgängerschutzsystem für ein Fahrzeug, mit den Schritten:

- Erfassen einer durch einen Aufprall eines Objekts (10) auf das Fahrzeug (12) bewirkten Deformation mit einer Sensorik (14, 30),
- Auswerten der von der Sensorik (14, 30) gelieferten Signale, so dass Informationen über die Charakteristik des Aufpralls geliefert werden können, und
- Bereitstellen einer Vorrichtung (130) zum Anheben einer Haube, insbesondere einer Motorhaube, des Fahrzeugs (12), die in Abhängigkeit der Informationen über die Charakteristik des Aufpralls betätigt werden kann, **dadurch gekennzeichnet,**
- **dass** aus der bewirkten Deformationen eine Deformationsarbeit ermittelt wird,
- **dass** unter Berücksichtigung von Zeitinformation, die von der Sensorik (14, 30) erfasst wird, eine Intrusionsgeschwindigkeit des Objekts (10) ermittelt wird,
- **dass** unter Berücksichtigung der Deformationsarbeit und der Intrusionsgeschwindigkeit ein die Masse des Objekts (10) kennzeichnender Parameter ermittelt wird und
- **dass** die Intrusionsgeschwindigkeit und die Masse des Objekts (10) berücksichtigt werden, um zu entscheiden, ob die Vorrichtung (30) zum Anheben der Haube betätigt wird.

**Claims**

1. Pedestrian protection system for a vehicle, having

   - a sensor system (14, 30) for sensing a deformation caused by an impact from an object (10) on the vehicle (12),
   - means (16) for evaluating the signals supplied by the sensor system (14, 30) such that information relating to the characteristics of the impact can be supplied, and
   - an apparatus (130) for raising a bonnet, in particular an engine bonnet, of the vehicle (12) which can be activated as a function of the information relating to the characteristic of the impact,
   **characterized**
   - **in that** the means (16) for evaluating the deformation caused can determine a deformation work,
   - **in that** the evaluation means (16) can determine an intrusion speed of the object (10) by taking into account time information which is sensed by the sensor system (14, 30),
   - **in that** a parameter characterizing the mass of the object (10) can be determined by taking into account the deformation work and intrusion speed, and
   - **in that** the intrusion speed and mass of the object (10) are taken into account in order to decide whether the apparatus (30) for raising the bonnet is activated.

2. Pedestrian protection system according to Claim 1, **characterized in that** the evaluation means (16) determine the deformation work on the basis of a stored table and/or calculation.

3. Pedestrian protection system according to Claim 1 or 2, **characterized in that** the parameter ($m_0$) characterizing the mass of the object (10) can be calculated using the relationship

$$m_0 = k \cdot \frac{W_{Def}}{v_0^2},$$

wherein

$m_0$ : mass,
$W_{Def}$ : deformation work,
$v_0$ : intrusion speed on the occasion of the first contact at an instant $t_0$, and
$k$ : constant.

4. Pedestrian protection system according to one of the preceding claims, **characterized in that** an effective mass ($m_{eff}$) can be calculated from the parameter ($m_0$) characterizing the mass of the object (10) by using the relationship

$$m_{eff} = f_{dyn} \cdot m_0 \, ,$$

wherein

$m_0$ : mass,
$m_{eff}$ : effective mass, and
$f_{dyn}$ : dynamic factor.

5. Pedestrian protection system according to one of the preceding claims, **characterized**

   - **in that** an activation of a pedestrian protection is possible given a mass ($m_0$) or an effective mass ($m_{eff}$) of between approximately 5 kg and 20 kg, and
   - **in that** an activation of pedestrian protection is prevented given a mass ($m_0$) or an effective mass ($m_{eff}$) of less than approximately 5 kg and greater than 20 kg.

6. Pedestrian protection system according to one of the preceding claims, **characterized**

   - **in that** an activation of a pedestrian protection is possible given an intrusion speed of between approximately 20 km/h and 60 km/h, and
   - **in that** an activation of a pedestrian protection is prevented given an intrusion speed of less than approximately 20 km/h and greater than 60 km/h.

7. Pedestrian protection system according to one of the preceding claims, **characterized in that** the sensor system comprises a number of sensors (14, 30) having a number of sensitive areas (18), the sensitive areas (18) being located at various locations of the vehicle (12), in particular the front of the vehicle.

8. Pedestrian protection system according to one of the preceding claims, **characterized in that** the sensors (14, 30) or the sensitive areas (18) of the sensors (14, 30) are arranged along a bumper (20) of the vehicle (12).

9. Pedestrian protection system according to one of the preceding claims, **characterized in that** the sensitive areas (18) belonging to a sensor (14, 30) are arranged at regular intervals along a bumper (20) of the vehicle (12).

10. Pedestrian protection system according to one of the preceding claims, **characterized in that** sensitive areas (18) of neighbouring sensors (14a, 14b, 14c, 14d) are arranged offset from one another or next to one another such that in the event of impact of an object (10) neighbouring sensors (14a, 14b, 14c, 14d) supply signals of different intensity.

11. Pedestrian protection system according to one of the preceding claims, **characterized**

    - **in that** the sensors (14) are optical fibre sensors (30) at one end (24) of which light can be launched and at the other end (26) of which the intensity of the emerging light can be measured,
    - **in that** the sensitive areas (18) of the sensors (14) are produced by varying the surface of the optical fibre sensors (30), and
    - **in that** more or less light can be coupled out of the sensitive areas (18) as a function of the deformation of the sensitive areas (18) such that the measured intensity of emerging light can be used as a measure of the deformation of the sensitive areas (18).

12. Pedestrian protection system according to one of the preceding claims, **characterized**

    - **in that** an activation apparatus (120) which has a pressure supply device (122) and an actuator (160), in particular a pneumatic actuator, connected to the pressure supply device (122) by means of a valve (126), is provided
    - **in that** the apparatus (130) for raising the bonnet can be connected to the activation apparatus (120), and can be activated by the application of pressure to the actuator (160), and
    - **in that** the apparatus (130) for raising the engine bonnet has at least one bonnet retaining element (132, 132') and at least one bolt (134), it being possible to adjust the bonnet retaining element (132, 132') into an unlocking position upon activation of the apparatus (130).

13. Pedestrian protection system according to Claim 12, **characterized in that** the activation apparatus (120) and the apparatus (130) for raising the engine hood can be connected to one another by means of an intermediate element (150).

14. Pedestrian protection system according to Claim 12 or 13, **characterized in that** the bonnet retaining element (132, 132') can be pivoted about a retaining element axle (138) and is connected to a support element (140), the support element (140) having at least one, preferably two slots (142) in which the retaining element axle (138) slides into an unlocked state or a locked state.

15. Pedestrian protection system according to Claim 14, **characterized in that** the slot (142) is provided at one end of the support element (140) which faces the activation apparatus (120), the slot (142) being dimensioned in such a way that its length substantially corresponds to the shortening of the actuator (160) upon application of pressure.

16. Pedestrian protection system according to one of Claims 12 to 15, **characterized in that** the at least one bolt (134) is designed in such a way that a first part (134') of the bolt (134) is of substantially U-shaped design and is pivotably connected to the support element (140), and a second part (134") of the bolt (134) can be connected to the intermediate element (150) by means of an intermediate element axle (152).

17. Pedestrian protection system according to Claim 16, **characterized in that** the second part of the at least one bolt (134) is of rail-shape design, and the intermediate element axle (152) runs in the rail on application of pressure.

18. Pedestrian protection system according to Claim 16 or 17, **characterized in that** the retaining element axle (138) and the intermediate element axle (152) are permanently connected to one another at their two ends by means of at least one axle connection (154).

19. Pedestrian protection system according to one of Claims 16 to 18, **characterized in that** the second part (134'') of the at least one bolt (134) is designed in one piece with the first, substantially U-shaped part (134') of the bolt (134), the second part (134'') being designed as an extension of one of the U parts situated opposite one another, and encloses an angle $\alpha$ with this U part, $\alpha$ being equal to or preferably greater than 90°.

20. Pedestrian protection system according to one of Claims 14 to 19, **characterized in that** a second bonnet retaining element (132') is provided which is pivotably fastened on an end of the support element (140) averted from the activation apparatus (120), the two bonnet retaining elements (132, 132') being activated synchronously.

21. Pedestrian protection system according to one of Claims 16 to 20, **characterized in that** the U-shape part (134') of the bolt (134) and the retaining element axle (138) are dimensioned in such a way that in the locking position the retaining element axle (138) cooperates with the U-shape part (134') of the bolt (134) in a form-fit and/or force-fit way.

22. Pedestrian protection system according to Claim 20 or 21, **characterized in that** the bonnet retaining elements (132, 132') are connected to one another in such a way that a trapezoidal bonnet holder is formed.

23. Pedestrian protection system according to one of Claims 12 to 22, **characterized in that** the pressure supply device (122) of the activation apparatus (120) has a pump (124), in particular a micropump, and a pressure accumulator (128) arranged between the pump (124) and the valve (126), the valve (126) being a high-speed valve.

24. Pedestrian protection system according to one of Claims 12 to 23, **characterized in that** the pressure supply device (122) of the activation device (120) has a pump, in particular a micropump (124), which is connected to the valve (126), a pressure accumulator (128) being provided which extends into the actuator (160) in order to reduce the installation space being exposed to the pressure supply device (122).

25. Pedestrian protection system according to one of Claims 13 to 24, **characterized in that** the actuator (160) on the one hand is connected permanently to the pressure supply device (122), a pendulum connection preferably being provided, and on the other hand is connected to the activation device (120) by means of the intermediate element (150).

26. Pedestrian protection system according to one of Claims 12 to 25, **characterized in that** the actuator (160) can be activated by compressed air, gas or liquid.

27. Method for protecting pedestrians with the aid of a pedestrian protection system for a vehicle, having the steps of:

- using a sensor system (14, 30) to sense a deformation caused by an impact of an object (10) on the vehicle (12),
- evaluating the signals supplied by the sensor system (14, 30) such that it is possible to supply information relating to the characteristic of the impact, and
- providing an apparatus (130) for raising a bonnet, in particular an engine bonnet, of the vehicle (12), which can be activated as a function of the information relating to the characteristic of the impact,

**characterized**

- **in that** a deformation work is determined from the deformations caused,
- **in that** an intrusion speed of the object (10) is determined by taking into account time information which is sensed by the sensor system (14, 30).
- **in that** a parameter characterizing the mass of the object (10) is determined by taking into account the deformation work and the intrusion speed, and
- **in that** the intrusion speed and the mass of the object (10) are taken into account in order to decide whether the apparatus for raising the bonnet is activated.

**Revendications**

1. Système de protection des piétons pour un véhicule, avec

- un équipement de détection (14, 30) pour enregistrer une déformation produite par un impact d'un objet (10) sur le véhicule (12),
- des moyens (16) pour interpréter les signaux fournis par l'équipement de détection (14, 30), afin de pouvoir délivrer des informations sur la caractéristique de l'impact,
- et un dispositif (130) pour relever un capot du véhicule (12), notamment un capot moteur, dispositif qui peut être actionné en fonction des informations sur la caractéristique de l'impact,

**caractérisé**

- **en ce que** les moyens (16) pour interpréter les déformations produites peuvent déterminer un travail de déformation,
- **en ce que** les moyens d'interprétation (16) peuvent déterminer une vitesse d'intrusion de l'objet (10) en tenant compte de l'information de temps qui est enregistrée par l'équipement de détection (14, 30),
- **en ce qu'**un paramètre caractérisant la masse de l'objet (10) peut être déterminé en tenant compte du travail de déformation et de la vitesse d'intrusion,
- et **en ce qu'**on tient compte de la vitesse d'intrusion et de la masse de l'objet (10) pour décider de l'actionnement du dispositif (130) pour relever le capot.

2. Système de protection des piétons selon la revendication 1, **caractérisé en ce que** les moyens d'interprétation (16) déterminent le travail de déformation sur la base d'une table mémorisée et/ou par le calcul.

3. Système de protection des piétons selon la revendication 1 ou 2, **caractérisé en ce que** le paramètre ($m_o$) caractérisant la masse de l'objet (10) peut être calculé d'après la relation

$$m_o = k \cdot \frac{W_{Def}}{v_o^2},$$

où :

$m_o$ : masse,
$W_{Def}$ : travail de déformation,
$v_o$ : vitesse d'intrusion, au premier contact à un instant $t_o$,
$k$ : constante.

4. Système de protection des piétons selon l'une quelconque des revendications précédentes, **caractérisé en ce**

**qu'**à partir du paramètre ($m_o$) caractérisant la masse de l'objet (10), on peut calculer une masse effective ($m_{eff}$) d'après la relation

$$m_{eff} = f_{dyn} \cdot m_o,$$

où :

$m_o$ : masse,
$m_{eff}$ : masse effective,
$f_{dyn}$ : facteur dynamique.

5. Système de protection des piétons selon l'une quelconque des revendications précédentes, **caractérisé**

   - **en ce que** la protection des piétons peut être activée pour une masse ($m_o$) ou encore une masse effective ($m_{eff}$) comprise entre environ 5 kg et 20 kg,
   - et **en ce que** l'activation de la protection des piétons est empêchée pour une masse ($m_o$) ou encore une masse effective ($m_{eff}$) inférieure à environ 5 kg et supérieure à 20 kg.

6. Système de protection des piétons selon l'une quelconque des revendications précédentes, **caractérisé**

   - **en ce que** la protection des piétons peut être activée pour une vitesse d'intrusion comprise entre environ 20 km/h et 60 km/h,
   - et **en ce que** l'activation de la protection des piétons est empêchée pour une vitesse d'intrusion inférieure à environ 20 km/h et supérieure à 60 km/h.

7. Système de protection des piétons selon l'une quelconque des revendications précédentes, **caractérisé en ce que** l'équipement de détection comprend plusieurs capteurs (14, 30) ayant plusieurs zones détectrices (18), sachant que les zones détectrices (18) se trouvent en différents endroits du véhicule (12), notamment de l'avant du véhicule.

8. Système de protection des piétons selon l'une quelconque des revendications précédentes, **caractérisé en ce que** les capteurs (14, 30) ou encore les zones détectrices (18) des capteurs (14, 30) sont disposé(e)s le long d'un pare-chocs (20) du véhicule (12).

9. Système de protection des piétons selon l'une quelconque des revendications précédentes, **caractérisé en ce que** les zones détectrices (18) associées à un capteur (14, 30) sont disposées à intervalles réguliers le long d'un pare-chocs (20) du véhicule (12).

10. Système de protection des piétons selon l'une quelconque des revendications précédentes, **caractérisé en ce que** les zones détectrices (18) de capteurs voisins (14a, 14b, 14c, 14d) sont disposées en décalage mutuel ou en juxtaposition, de sorte que, lors de l'impact d'un objet (10), des capteurs voisins (14a, 14b, 14c, 14d) délivrent des signaux d'intensités différentes.

11. Système de protection des piétons selon l'une quelconque des revendications précédentes, **caractérisé**

   - **en ce que** les capteurs (14) sont des capteurs (30) à fibre optique, à une extrémité (24) desquels peut être introduite de la lumière et à l'autre extrémité (26) desquels l'intensité de la lumière sortante peut être mesurée,
   - **en ce que** les zones détectrices (18) des capteurs (14) sont créées en modifiant la surface des capteurs (30) à fibre optique,
   - et **en ce que** plus ou moins de lumière peut être évacuée des zones détectrices (18) en fonction de la déformation de ces zones (18), de sorte que l'intensité mesurée de la lumière sortante peut être utilisée comme mesure de la déformation des zones détectrices (18).

12. Système de protection des piétons selon l'une quelconque des revendications précédentes, **caractérisé**

   - **en ce qu'**il est prévu un dispositif d'actionnement (120) qui présente un équipement (122) d'alimentation en pression et un actionneur (160), notamment un actionneur pneumatique, relié à l'équipement (122) d'alimentation en pression au moyen d'une soupape (126),

- **en ce que** le dispositif (130) pour relever le capot peut être relié au dispositif d'actionnement (120) et peut être actionné en sollicitant en pression l'actionneur (160),

- et **en ce que** le dispositif (130) pour relever le capot moteur présente au moins un élément (132, 132') de maintien du capot et au moins un élément de verrouillage (134), l'élément (132, 132') de maintien du capot pouvant être déplacé dans une position de déverrouillage lors de l'actionnement du dispositif (130).

**13.** Système de protection des piétons selon la revendication 12, **caractérisé en ce que** le dispositif d'actionnement (120) et le dispositif (130) pour relever le capot moteur sont mutuellement reliés via un élément intermédiaire (150).

**14.** Système de protection des piétons selon la revendication 12 ou 13, **caractérisé en ce que** l'élément (132, 132') de maintien du capot peut être pivoté autour d'un axe (138) d'élément de maintien et est relié à un élément porteur (140), l'élément porteur (140) présentant au moins une et de préférence deux fentes (142), fente dans laquelle l'axe (138) d'élément de maintien glisse respectivement dans un état de déverrouillage ou de verrouillage.

**15.** Système de protection des piétons selon la revendication 14, **caractérisé en ce que** la fente (142) est prévue à une extrémité de l'élément porteur (140) qui est tournée vers le dispositif d'actionnement (120), la fente (142) étant dimensionnée de telle sorte que sa longueur correspond sensiblement au raccourcissement de l'actionneur (160) lors d'une sollicitation en pression.

**16.** Système de protection des piétons selon l'une quelconque des revendications 12 à 15, **caractérisé en ce que** l'élément de verrouillage au moins unique (134) est conçu de telle sorte qu'une première partie (134') de l'élément de verrouillage (134) est réalisée sensiblement en forme de U et est reliée à pivotement à l'élément porteur (140), et une deuxième partie (134'') de l'élément de verrouillage (134) peut être reliée à l'élément intermédiaire (150) via un axe (152) d'élément intermédiaire.

**17.** Système de protection des piétons selon la revendication 16, **caractérisé en ce que** la deuxième partie de l'élément de verrouillage au moins unique (134) est réalisée en forme de glissière, et l'axe (152) d'élément intermédiaire se déplace dans la glissière lors d'une sollicitation en pression.

**18.** Système de protection des piétons selon la revendication 16 ou 17, **caractérisé en ce que** l'axe (138) d'élément de maintien et l'axe (152) d'élément intermédiaire sont fixement reliés entre eux à leurs deux extrémités au moyen d'au moins une liaison d'axes (154).

**19.** Système de protection des piétons selon l'une quelconque des revendications 16 à 18, **caractérisé en ce que** la deuxième partie (134'') de l'élément de verrouillage au moins unique (134) est réalisée d'un seul tenant avec la première partie (134') sensiblement en forme de U de l'élément de verrouillage (134), sachant que la deuxième partie (134'') est conçue comme prolongement d'une des deux branches de U mutuellement opposées et forme un angle $\alpha$ par rapport à cette branche de U, $\alpha$ étant égal ou de préférence supérieur à 90°.

**20.** Système de protection des piétons selon l'une quelconque des revendications 14 à 19, **caractérisé en ce qu'**il est prévu un deuxième élément (132') de maintien du capot qui est fixé à pivotement à une extrémité de l'élément porteur (140) qui est opposée au dispositif d'actionnement (120), les deux éléments (132, 132') de maintien du capot pouvant être actionnés en synchronisme.

**21.** Système de protection des piétons selon l'une quelconque des revendications 16 à 20, **caractérisé en ce que** la partie (134') en forme de U de l'élément de verrouillage (134) et l'axe (138) d'élément de maintien sont dimensionnés de telle sorte que, dans la position de verrouillage, l'axe (138) d'élément de maintien coopère positivement et/ou à force avec la partie (134') en forme de U de l'élément de verrouillage (134).

**22.** Système de protection des piétons selon la revendication 20 ou 21, **caractérisé en ce que** les éléments (132, 132') de maintien du capot sont mutuellement reliés de telle sorte qu'ils forment un dispositif trapézoïdal de maintien du capot.

**23.** Système de protection des piétons selon l'une quelconque des revendications 12 à 22, **caractérisé en ce que** l'équipement (122) d'alimentation en pression du dispositif d'actionnement (120) présente une pompe (124), notamment une pompe miniature, et un accumulateur de pression (128) disposé entre la pompe (124) et la soupape (126), sachant que la soupape (126) est une soupape à grande vitesse.

**24.** Système de protection des piétons selon l'une quelconque des revendications 12 à 23, **caractérisé en ce que** l'équipement (122) d'alimentation en pression du dispositif d'actionnement (120) présente une pompe, notamment une pompe miniature (124), qui est reliée à la soupape (126), sachant qu'il est prévu un accumulateur de pression (128) qui, afin de réduire l'espace occupé par l'équipement (122) d'alimentation en pression, s'étend dans l'actionneur (160).

**25.** Système de protection des piétons selon l'une quelconque des revendications 13 à 24, **caractérisé en ce que** l'actionneur (160), d'un côté est relié fixement à l'équipement (122) d'alimentation en pression, un rattachement pendulaire étant de préférence prévu, et de l'autre côté est relié au dispositif d'actionnement (120) via l'élément intermédiaire (150).

**26.** Système de protection des piétons selon l'une quelconque des revendications 12 à 25, **caractérisé en ce que** l'actionneur (160) peut être actionné par de l'air comprimé, par un gaz ou par un liquide.

**27.** Procédé de protection des piétons avec un système de protection des piétons pour un véhicule, comprenant les étapes suivantes :

- enregistrement, par un équipement de détection (14, 30), d'une déformation produite par un impact d'un objet (10) sur le véhicule (12),
- interprétation des signaux fournis par l'équipement de détection (14, 30), de sorte que des informations sur la caractéristique de l'impact peuvent être délivrées,
- et mise à disposition d'un dispositif (130) pour relever un capot du véhicule (12), notamment un capot moteur, dispositif qui peut être actionné en fonction des informations sur la caractéristique de l'impact,
**caractérisé**
- **en ce qu'**on détermine, à partir des déformations produites, un travail de déformation,
- **en ce qu'**on détermine une vitesse d'intrusion de l'objet (10) en tenant compte de l'information de temps qui est enregistrée par l'équipement de détection (14, 30),
- **en ce qu'**on détermine un paramètre caractérisant la masse de l'objet (10) en tenant compte du travail de déformation et de la vitesse d'intrusion,
- et **en ce qu'**on tient compte de la vitesse d'intrusion et de la masse de l'objet (10) pour décider de l'actionnement du dispositif (130) pour relever le capot.

Fig. 1

Fig. 2

$v_0 \neq 0$

Fig. 3

$\Delta v = 0$

Fig. 4

$\Delta v = 0$

Fig. 5

```
                                              ┌──────────┐
                                              │ Trigger· │───── S01
                                              │  =f(T)   │
                                              └──────────┘
                                                   │
      ┌──────────┬──────────────────┬──────────────┼──────────────┬──────────────┐
      ▼          ▼                  ▼              ▼              ▼
 ┌─────────┐ ┌──────────┐    ┌──────────┐   ┌──────────┐   ┌──────────────┐
 │    N    │ │ Intru.(I)│    │   v₀     │   │  Dyn.    │   │ N (Haupt-    │
 │(Sensor) │ │ Sum(3max)│    │ (dI/dt)  │   │  Krit.·  │   │  Maxima)     │
 └─────────┘ └──────────┘    └──────────┘   └──────────┘   └──────────────┘
    S02         S03             S04             S05             S06
```

$$N (Sensor) \quad S02$$
$$Intru.(I)\ Sum(3max) \quad S03$$
$$v_0\ (dI/dt) \quad S04$$
$$Dyn.\ Krit. \quad S05$$
$$N (Haupt\text{-}Maxima) \quad S06$$

S07 — Berechnung Masse
$$m_0 = k \cdot W/(v_0)^2$$

S08 — Abgleich Masse
$$m_{eB} = m_0 \cdot I_{dyn}$$

S09 — $5 < m_{eB} < 20$ kg
— Nein → nicht feuern
— Ja ↓

S10 — $20 < v_0 < 60$ km/h
— Nein → nicht feuern
— Ja ↓

S11 — Bein ?
— Nein → nicht feuern
— Ja ↓

S12 — anderes Objekt ?
— Ja → nicht feuern
— Nein ↓

feuern

Fig. 6

$S_2 \sim 2 s_1 \wedge$

$S_3 \sim 4 s_1$

**Fig. 7**

a)

18   22   14   14a   14b   14c   14d

☒☒ = aktiver Sensorbereich

b)   14

c)   14

Fig. 8

Fig. 9

Fig. 10

Fig. 11

a)

30

18

b)

30

18

c)

18

30

Fig. 12

Fig. 13

Sensor Array 14

Inter-Face-Einheit S2

ECU Algorithmus incl. CAN-Interface 16

Aktuator S6

Leistungs-Elektronik des Aktuators S4

122

160'

160

132

130

152'

124  126

120

150  152  138  134  136  140

138'

110

Fig. 14

122

160

160'

132'

132'

138  142  134'

124  126

120

150  152  134''  134  136  140

138'

110

Fig. 15

EP 1 426 252 B1

Fig. 16

Fig. 17

EP 1 426 252 B1

Fig. 18

Fig. 13

EP 1 426 252 B1

120

160

122

160'

124

126

Fig.20

120

120

128

160

122

160'

124

126

Fig.21

Fig. 22

Fig. 23